# EUROPÄISCHE PATENTSCHRIFT

(11) **EP 4 300 635 B1**
(45) Veröffentlichungstag und Bekanntmachung des Hinweises auf die Patenterteilung: **02.07.2025**
(21) Anmeldenummer: 22211499.3
(22) Anmeldetag: 05.12.2022
(51) Int. Cl.: H01M 4/64, H01M 4/70, H01M 50/533

(54) **SCHNEIDVERFAHREN UND SCHNEIDVORRICHTUNG ZUM VEREINZELN VON ELEKTRODENSTÜCKEN VON EINEM BAHNFÖRMIGEN ELEKTRODENSUBSTRAT**
CUTTING METHOD AND CUTTING DEVICE FOR SEPARATING ELECTRODE PIECES FROM A WEB-SHAPED ELECTRODE SUBSTRATE
PROCÉDÉ DE COUPE ET DISPOSITIF DE COUPE POUR SÉPARER DES PIÈCES D'ÉLECTRODE D'UN SUBSTRAT D'ÉLECTRODE EN FORME DE BANDE

(30) Priorität: 20.06.2022 DE 102022002218
(43) Veröffentlichungstag der Anmeldung: 03.01.2024
(73) Patentinhaber: Grob-Werke GmbH & Co. KG, 87719 Mindelheim (DE)
(72) Erfinder: Glück, Moritz, 82362 Weilheim (DE); Schuster, Markus, 87772 Pfaffenhausen (DE)
(74) Vertreter: KASTEL Patentanwälte PartG mbB

(56) Entgegenhaltungen:
- WO-A1-2020/192845
- DE-A1- 102019 129 470
- JP-A- 2017 084 691
- US-A1- 2018 079 035

## Beschreibung

Die Erfindung betrifft ein im Zuge einer Serienfertigung von Zellverbünden von Batterien durchzuführendes Schneidverfahren zum Vereinzeln von Elektrodenstücken von einem bahnförmigen Elektrodensubstrat mittels einer Schneideinrichtung, um so Elektrodenstücke mit einem flächigen Aktivmaterial und einer seitlichen Ableiterfahne zu erhalten. Weiter betrifft die Erfindung eine Schneidvorrichtung zum Aus- und Abschneiden von Elektrodenstücken von einem bahnförmigen Elektrodensubstrat, um Elektrodenstücke mit flächigem Aktivmaterial und einer seitlichen Ableiterfahne für eine Serienfertigung von Zellverbünden von Batterien zu erhalten. Weiter betrifft die Erfindung ein Computerprogramm mit Steueranweisungen zum Durchführen des Schneidverfahrens sowie eine Verwendung des Schneidverfahrens oder der Schneidvorrichtung oder des Computerprogramms in einer Serienfertigung von Zellverbünden von Batterien, insbesondere für Elektrofahrzeuge.

Zum technologischen Hintergrund wird auf folgende Literaturstellen verwiesen, die derartige Schneidverfahren und Schneidvorrichtungen zeigen:
[1] WO 2020/192845 A1
[2] EP 3 415 265 A1
[3] https://www.youtube.com/watch?v=XStpCq pgZOg
[4] https://www.youtube.com/watch?v=vXfJeHxbQKA
[5] JP 2017 084691 A
[6] US 2018/079035 A1

Das Vereinzeln von Elektroden in der Batteriezellfertigung erfolgt im industriellen Maßstab per mechanischem Trennschnitt oder per Laserschnitt.

In der Herstellung sind in der Regel zwei Schnittprozesse vorgesehen:
1. Ausschneiden der Ableiterkontur ("Notching")
2. Trennschnitt der Elektroden zur Vereinzelung

Normalerweise erfolgen, wie aus [3] und [4] ersichtlich, die beiden Prozesse in separaten Anlagen, d.h. das Elektrodenmaterial wird in der ersten Anlage abgewickelt, genotched und wieder aufgewickelt. Anschließend wird der Coil in eine zweite Anlage eingebracht, in der das Stacking erfolgt. Dort werden die bereits genotchten Bahnen dann per Laser oder mechanisch getrennt, so dass die einzelnen Elektroden entstehen. Bei [3] und [4] sowie [6] ist die Verarbeitung in zwei separaten Schritten zu sehen. Es gibt sowohl separate Anlagen für das Notching (vgl. [3]), als auch kombinierte Verfahren (vgl. [4], [6]). Dabei erkennt man allerdings, dass zwischen dem Notching und Trennen mehrere Einheiten zur Bahnführung und Positionierung notwendig sind (Umlenkwalzen, Drehrahmen, etc.). Ein Nachteil dieser Verfahren ist einerseits, dass viele Handlingsschritte notwendig sind (separate Anlagen, Umlenkungen zwischen den Prozessen in einer Anlage). Diese haben einen negativen Einfluss auf das Material bzw. die Gefahr von Beschädigungen ist sehr hoch. Andererseits steigt durch die Verkettung mehrerer unabhängiger Prozessschritte auch die Ungenauigkeit der Geometrie, d.h. die Fertigungstoleranzen müssen größer definiert werden.

Teilweise werden beide Prozesse auch in einer Anlage kombiniert, wobei hierbei die Bahn zwischen beiden Prozessen über Bahnführungssysteme (Walzen, Bahnzugmesswalzen und Drehrahmen) geführt wird.

Hintergrund ist, dass die Bahn vor dem Trennen sauber positioniert werden muss (seitliche Orientierung), damit die Geometrie der Elektroden nach dem Vereinzeln erreicht wird.

Aus [2] sind eine Schneidvorrichtung und ein Schneidverfahren zum Vereinzeln der Elektroden bekannt. Nur ein Trennschnitt wird dabei auf einer Walze durchgeführt. Der zudem vorgesehene Schnitt zum Einbringen einer Ableiterkontur erfolgt in einem vorgelagerten Prozess.

Aus [1] und [5] ist jeweils eine kombinierte Schneid- und Fixiervorrichtung zur Herstellung von Zellverbünden bekannt, bei der bereits viele der oben genannten Nachteile vermieden werden. Insbesondere sind aus [5] ein Verfahren gemäß Oberbegriff des Anspruchs 1 sowie eine Vorrichtung gemäß Oberbegriff des Nebenanspruchs bekannt.

Ausgehend von [1] oder [5] hat sich die Erfindung zur Aufgabe gestellt, das Schneiden von Elektrodenstücken weiter zu verbessern.

Zum Lösen dieser Aufgabe schafft die Erfindung ein Schneidverfahren und eine Schneidvorrichtung gemäß den unabhängigen Ansprüchen.

Vorteilhafte Ausgestaltungen sind Gegenstand der Unteransprüche. Ein Computerprogramm mit Steueranweisungen zum automatischen Durchführen des Schneidverfahrens sowie vorteilhafte Verwendungen sind Gegenstand der weiteren Nebenansprüche.

Die Erfindung schafft gemäß einem Aspekt davon ein im Zuge einer Serienfertigung von Zellverbünden von Batterien durchzuführendes Schneidverfahren zum Vereinzeln von Elektrodenstücken von einem bahnförmigen Elektrodensubstrat mittels einer Schneideinrichtung, um so Elektrodenstücke mit einem flächigen Aktivmaterial und einer seitlichen Ableiterfahne zu erhalten, mit den Schritten:
a) Bereitstellen des bahnförmigen Elektrodensubstrats, welches einen Aktivmaterialbereich und an wenigstens einer Seite des Aktivmaterialbereichs einen Ableiterstreifen aufweist, durch Fördern des bahnförmigen Elektrodensubstrats zu der Schneideinrichtung;
b) Freischneiden wenigstens einer Ableiterfahne aus dem Ableiterstreifen, wobei in Förderrichtung vor und/oder nach der Ableiterfahne ein Abschnitt nicht benötigten Materials des Ableiterstreifens entsteht,
c) Vereinzeln des mit freigeschnittener Ableiterfahne versehenen Elektrodenstücks durch Durchschneiden des Elektrodensubstrats einschließlich Aktivmaterials und auch des in Schritt b) ausgeschnittenen Abschnitts, so dass durch das Durchschneiden des Abschnitts dieser verkleinert und in mehrere Abschnittsteile zerlegt wird, und
d) Entfernen der Abschnittsteile aus der Schneideinrichtung.

Vorzugsweise ist das Aktivmaterial ein flächiges ein- oder beidseitig beschichtetes Aktivmaterial.

Vorzugsweise wird ein Elektrodensubstrat bereitgestellt, welches einen ein- oder beidseitig beschichteten Aktivmaterialbereich und an wenigstens einer Beschichtungskante des Aktivmaterialbereichs den Ableiterstreifen aufweist.

Der Ableiterstreifen ist vorzugsweise ein unbeschichteter Ableiterstreifen oder Randstreifen.

Insbesondere weist das bahnförmige Elektrodensubstrat eine elektrisch leitende Basisschicht auf, die im Aktivmaterialbereich ein- oder beidseitig mit Aktivmaterial zum Bilden der jeweiligen Batterieelektrode beschichtet ist und an wenigstens einem Randstreifen unbeschichtet ist und somit den Ableiterstreifen bildet. Grundsätzlich ist ein solches Elektrodensubstrat gut bekannt und auf dem Markt erhältlich.

Vorzugsweise wird das bahnförmige Elektrodensubstrat in das Bearbeitungsfeld von Schneideinheiten der Schneideinrichtung gefördert.

Vorzugsweise erfolgt das Schneiden zum Vereinzeln und/oder zum Durchschneiden des Elektrodenstücks und/oder des Abschnitts zumindest teilweise quer zur Bahnlaufrichtung des Elektrodensubstrats (Förderrichtung). Bei einigen Ausführungsformen ist vorgesehen, dass beim Schneiden zum Vereinzeln auch in oder gegen die Bahnlaufrichtung geschnitten wird. Z.B. wird der Abschnitt durch einen Längsschnitt herausgetrennt.

In Schritt d) lässt sich ein sicheres vollständiges Entfernen aller Abschnittsteile aus der Schneideinrichtung erreichen, so dass eine Störung des Schneidprozesses für nachfolgende Elektrodenstücke durch verbleibende Abschnittsteile vermieden wird.

Vorzugsweise erfolgt das Entfernen mittels einer Absaugeinrichtung, die weiter vorzugsweise permanent die Luft oder das sonstige Umgebungsmedium am Bearbeitungsbereich der Schneideinheiten absaugt, um Störungen der Schneidstrahlen durch beim Schneiden entstehende Partikel zu vermeiden.

Bei einigen Ausführungsformen werden zusätzliche Blaseinheiten bereitgestellt, um in Verbindung mit der Absaugung einen gerichteten Luftstrom zu erzeugen und zusätzlich die Strahlaustrittsbereiche an der Optik vor Verschmutzung zu schützen.

Durch das Durchschneiden des Abschnitts wird dieser verkleinert und in mehrere Abschnittsteile zerlegt, so dass er leichter entfernbar ist und der Schneidprozess nicht durch größere fehlerhaft verbleibende Abschnitte gestört wird. Dies ist grundsätzlich bei unterschiedlichen Schneidstrategien möglich, z.B. auch bei sequentiellem Arbeiten von Schneideinheiten oder z.B. auch dann, wenn eine Schneideinheit der Schneideinrichtung nur zum Freischneiden der Ableiterfahne eingesetzt wird und die andere Schneideinheit der Schneideinrichtung zum Durchschneiden der Elektrodenstücke und des Abschnitts eingesetzt wird. Vorzugsweise arbeiten mehrere Schneideinheiten der Schneideinrichtung synchron, was zu einer geringeren Taktzeit führt.

Es ist bevorzugt, dass Schritt a) umfasst:
a1) Fördern des Elektrodensubstrats durch zwei hintereinander und/oder überlappend angeordnete Arbeitsbereiche einer ersten Schneideinheit und einer zweiten Schneideinheit der Schneideinrichtung.

Vorzugsweise umfasst Schritt b): Freischneiden wenigstens einer Ableiterfahne aus dem Ableiterstreifen, wobei zumindest in Förderrichtung nach der Ableiterfahne ein Abschnitt nicht benötigten Materials des Ableiterstreifens entsteht. Auch kann das Freischneiden derart erfolgen, dass zusätzlich in Förderrichtung vor der Ableiterfahne ein Abschnitt nicht benötigten Materials des Ableiterstreifens entsteht. Wie das Freischneiden der Ableiterfahne erfolgt, ist vom Format der Elektrode abhängig. Soll z.B. ein Elektrodenformat erzeugt werden, in dem die hintere Kante des Ableiters einer Kante des Aktivmaterials entspricht (d.h. die Ableiterfahne befindet sich ganz hinten an der Elektrode im Bezug zur Förderrichtung), wird der Abschnitt (nur) vorderhalb (in Bahnlaufrichtung) erzeugt.

Es ist bevorzugt, dass in Schritt b) mittels der ersten Schneideinheit ein in Förderrichtung vor der Ableiterfahne befindlicher erster Abschnitt ausgeschnitten wird und gleichzeitig, synchron oder zeitlich überlappend mittels der zweiten Schneideinheit ein in Förderrichtung hinter dieser Ableiterfahne befindlicher zweiter Abschnitt ausgeschnitten wird.

Es ist bevorzugt, dass in Schritt c) mittels der ersten Schneideinheit ein in Förderrichtung gesehen vorderer Durchschnitt durchgeführt wird und gleichzeitig, synchron oder zumindest zeitlich überlappend mittels der zweiten Schneideinheit ein in Förderrichtung gesehen hinterer Durchschnitt durchgeführt wird.

Zum Durchführen des vorderen oder hinteren Durchschnitts wird vorzugsweise ein Trennschnitt, insbesondere ein Transversalschnitt, durchgeführt.

Demnach ist bevorzugt, dass mehrere Schneideinheiten der Schneideinrichtung gleichzeitig oder zumindest zeitlich überlappend arbeiten. Beim zeitlichen Überlappen arbeitet die eine Schneideinheit verzögert zu der anderen Schneideinheit. Bei einem verzögerten Arbeiten erfolgt beispielsweise der erste Schnitt (Ableiterkontur + Trennschnitt) von einem ersten Scanner (Beispiel für erste Schneideinheit) und mit einem zeitlichen Versatz dazu der zweite Trennschnitt von einem zweiten Scanner (Beispiel für zweite Schneideinheit).

Die Bearbeitungsbereiche oder Arbeitsbereiche der ersten und zweiten Schneideinheit können in Förderrichtung gesehen gänzlich nacheinander angeordnet sein (so dass kein Überlappungsbereich entsteht). Vorzugsweise sind die Bearbeitungsbereiche oder Arbeitsbereiche in Förderrichtung versetzt zueinander, überlappen sich jedoch. Dies hat Vorteile, um den Bauraum der Schneideinrichtung möglichst klein zu halten.

Vorzugsweise umfasst das Schneidverfahren die Schritte:
Erzeugen wenigstens eines Schneidstrahls, insbesondere Laserstrahls, und
Lenken des wenigstens einen Schneidstrahls entlang von Schneidkurven, um die Schritte b) und c) durchzuführen.

Das Lenken des wenigstens einen Schneidstrahls erfolgt vorzugsweise durch Ablenken des wenigstens einen Schneidstrahls. Das Lenken oder Ablenken erfolgt vorzugsweise zur Vereinzelung einer Elektrode und/oder zum Freischneiden der Ableiterfahne während des Förderprozesses. Bevorzugt sind als Schneidkurven vorzugsweise automatisch berechnete - insbesondere 3-dimensionale -Schneidbahnen, insbesondere Laserbahnen, vorgesehen, bei denen die Förderbewegung und/oder die Schnittposition berücksichtigt wird. Vorzugsweise sind die Schneidbahnen abhängig von der Förderbewegung und werden - vorzugsweise automatisch - bei Änderungen der Förderbewegung entsprechend angepasst.

Es ist bevorzugt, dass Schritt b) umfasst:
b1) Lenken des wenigstens einen Schneidstrahls entlang einer vorderen Schneidkurve (insbesondere Schneidbahn), die sich von einem Strahleintrittspunkt in dem Inneren eines den späteren nicht benötigten Abschnitt des Ableiterstreifens bildenden Bereichs des Ableiterstreifens aus zu einem vorderen Eckbereich zwischen einer bezüglich Förderrichtung vorderen Ableiterfahne und dem Aktivmaterial des Elektrodenstücks erstreckt und sich dann von dem vorderen Eckbereich in einer Richtung quer zu der Förderrichtung nach außen erstreckt, um die vordere Ableiterfahne von dem verbleibenden nicht benötigten Abschnitt des Ableiterstreifens zu trennen.

Es ist bevorzugt, dass Schritt b) umfasst:
b2) Lenken des wenigstens einen Schneidstrahls entlang einer hinteren Schneidkurve, die sich von einem Strahleintrittspunkt in dem Inneren des den späteren nicht benötigten Abschnitt des Ableiterstreifens bildenden Bereichs des Ableiterstreifens aus zu einem hinteren Eckbereich zwischen einer bezüglich Förderrichtung hinteren Ableiterfahne und dem Aktivmaterial des Elektrodenstücks erstreckt und sich dann von dem hinteren Eckbereich in einer Richtung quer zu der Förderrichtung nach außen erstreckt, um die hintere Ableiterfahne von dem verbleibenden nicht benötigten Abschnitt des Ableiterstreifens zu trennen.

Es ist bevorzugt, dass Schritt b) umfasst:
b3) Lenken des Schneidstrahls entlang einer mittleren Schneidkurve, die sich vom Inneren des Abschnitts zu einem Eckbereich zwischen einer ersten Ableiterfahne und dem Aktivmaterial des Elektrodenstücks, dann in Förderrichtung zum Erzeugen einer Endkante des Aktivmaterials des Elektrodenstücks zwischen der ersten Ableiterfahne und einer zu dieser benachbarten zweiten Ableiterfahne und von dem Eckbereich zwischen der zweiten Ableiterfahne und dem Aktivmaterial in das Innere des Abschnitts hinein erstreckt und dort endet.

Es ist bevorzugt, dass Schritt c) umfasst:
c1) Lenken des wenigstens einen Schneidstrahls entlang einer Vereinzelungs-Schneidkurve, die sich von außerhalb des Ableiterstreifens durch den Abschnitt quer durch das Elektrodensubstrat zum Vereinzeln des Elektrodenstücks erstreckt. Vorzugsweise verläuft die Schneidkurve in einem mit dem Elektrodensubstrat mitbewegten Koordinatensystem quer durch das Elektrodensubstrat; transferiert auf ein unbewegtes Koordinatensystem verläuft die Schneidkurve (z.B. Laserbahn) je nach Bahngeschwindigkeit steiler oder flacher.

Es ist bevorzugt, dass der Schneidstrahl die Schneidkurven nacheinander durchfährt, vorzugsweise unter Abschaltung oder Ausblendung beim Sprung von Schneidkurve zu Schneidkurve. Insbesondere erfolgt eine An- und Abschaltung einer als Schneidstrahlung vorzugsweise verwendeten Laserstrahlung automatisch durch eine Steuerung der Strahlablenkeinheiten und des Lasers.

Es ist bevorzugt, dass die mittlere Schneidkurve nach der vorderen und hinteren Schneidkurve durchfahren wird.

Es ist bevorzugt, dass die Schritte in der Reihenfolge b1), b2), b3) und c1) durchgeführt werden.

Es ist bevorzugt, dass d) umfasst:
Abblasen oder Absaugen der Abschnittsteile.

Das Entfernen insbesondere durch Abblasen oder Absaugen erfolgt vorzugsweise örtlich und zeitlich direkt am Entstehungsort.

Gemäß einem weiteren Aspekt schafft die Erfindung eine Schneidvorrichtung zum Aus- und Abschneiden von Elektrodenstücken von einem bahnförmigen Elektrodensubstrat, um Elektrodenstücke mit flächigem Aktivmaterial und einer seitlichen Ableiterfahne für eine Serienfertigung von Zellverbünden von Batterien zu erhalten, wobei die Schneidvorrichtung umfasst:
eine Schneideinrichtung,
eine Fördereinrichtung zum Fördern von bahnförmigen Elektrodensubstrat, welches einen Aktivmaterialbereich und an wenigstens einer Seite des Aktivmaterialbereichs einen Ableiterstreifen aufweist, durch einen Arbeitsbereich der Schneideinrichtung,
eine Abschnittsentfernungseinrichtung zum Entfernen von während des Schneidens entstehender nicht benötigter Abschnitte,
und eine Steuerung, die dazu eingerichtet ist, die Schneideinrichtung dazu zu veranlassen,
wenigstens eine Ableiterfahne aus dem Ableiterstreifen freizuschneiden, wobei in Förderrichtung nach der Ableiterfahne ein Abschnitt nicht benötigten Materials des Ableiterstreifens entsteht, und einen Durchschnitt sowohl durch das mit der freigeschnittenen Ableiterfahne versehene Elektrodenstück als auch durch den in Schritt b) ausgeschnittenen Abschnitt durchzuführen, um das Elektrodenstück zu vereinzeln und den Abschnitt in mehrere Abschnittsteile aufzuteilen, um diese durch die Abschnittsentfernungseinrichtung zu entfernen.

Die Schneidvorrichtung, und insbesondere deren Steuerung, ist vorzugsweise dazu ausgebildet, das Schneidverfahren gemäß einer oder mehrerer der oben erläuterten vorteilhaften Ausgestaltungen des Verfahrens durchzuführen. Das Schneidverfahren wird vorzugsweise mit einer Schneidvorrichtung gemäß einer der vorteilhaften Ausgestaltungen der Vorrichtung durchgeführt.

Es ist bevorzugt, dass die Schneideinrichtung wenigstens eine Schneideinheit aufweist, die eine Schneidstrahlerzeugungseinrichtung zum Erzeugen eines Schneidstrahls, insbesondere einen Laser, und eine Schneidstrahlablenkungseinrichtung aufweist, wobei die Steuerung dazu eingerichtet ist, die Schneideinheit dazu zu veranlassen, den Schneidstrahl entlang einer oder mehrerer vorbestimmter Schneidkurven über das mittels der Fördereinrichtung geförderte Elektrodensubstrat zu lenken. Vorzugsweise ist die Steuerung dazu ausgebildet, die Schneideinheit dazu zu veranlassen den Schneidstrahl entsprechend der Schneidkurve an- oder abzuschalten. Die Schneidkurven sind vorzugsweise die oben bereits erwähnten automatisch abhängig von der Förderbewegung errechneten Schneidbahnen, insbesondere Laserbahnen zum entsprechenden Ablenken der Laserstrahlung.

Es ist bevorzugt, dass die Schneideinrichtung eine erste Schneideinheit mit einem ersten Arbeitsbereich und eine zweite Schneideinheit mit einem zweiten Arbeitsbereich aufweist, die in Förderrichtung der Fördereinrichtung hintereinander und/oder überlappend angeordnet sind,
und dass die Steuerung, insbesondere eine Steuereinheit derselben zum Steuern von Strahlablenkeinheiten, dazu eingerichtet ist, die Schneideinrichtung dazu zu veranlassen,
mittels der ersten Schneideinheit einen in Förderrichtung vor der Ableiterfahren befindlichen ersten Abschnitt auszuschneiden und gleichzeitig, synchron oder zeitlich überlappend mittels der zweiten Schneideinheit ein in Förderrichtung hinter dieser Ableiterfahne befindlichen zweiten Abschnitt auszuschneiden, und/oder
mittels der ersten Schneideinheit ein in Förderrichtung gesehen vorderen Durchschnitt durchzuführen und gleichzeitig, synchron oder zumindest zeitlich überlappend mittels der zweiten Schneideinheit einen in Förderrichtung gesehen hinteren Durchschnitt durchzuführen.

Es ist bevorzugt, dass die Steuerung dazu eingerichtet ist, die Schneidstrahlablenkungseinrichtung dazu zu veranlassen,
b1) mit dem Schneidstrahl, vorzugsweise zu einem vorab definierten Zeitpunkt, eine vordere Schneidkurve zu durchfahren, die sich von einem Strahleintrittspunkt in dem Inneren eines den späteren nicht benötigten Abschnitt des Ableiterstreifens bildenden Bereichs des Ableiterstreifens aus zu einem vorderen Eckbereich zwischen einer bezüglich Förderrichtung vorderen Ableiterfahne und dem Aktivmaterial des Elektrodenstücks erstreckt und sich dann von dem vorderen Eckbereich in einer Richtung quer zu der Förderrichtung nach außen erstreckt, um die vordere Ableiterfahne von dem verbleibenden nicht benötigten Abschnitt des Ableiterstreifens zu trennen.

Es ist bevorzugt, dass die Steuerung dazu eingerichtet ist, die Schneidstrahlablenkungseinrichtung dazu zu veranlassen,
b2) mit dem Schneidstrahl eine hintere Schneidkurve zu durchfahren, die sich von einem Strahleintrittspunkt in dem Inneren des den späteren nicht benötigten Abschnitt des Ableiterstreifens bildenden Bereich des Ableiterstreifens aus zu einem hinteren Eckbereich zwischen einer bezüglich Förderrichtung hinteren Ableiterfahne und dem Aktivmaterial des Elektrodenstücks erstreckt und sich dann von dem hinteren Eckbereich in einer Richtung quer zu der Förderrichtung nach außen erstreckt, um die hintere Ableiterfahne von dem verbleibenden nicht benötigten Abschnitt des Ableiterstreifens zu trennen.

Es ist bevorzugt, dass die Steuerung dazu eingerichtet ist, die Schneidstrahlablenkungseinrichtung dazu zu veranlassen,
b3) mit dem Schneidstrahl eine mittlere Schneidkurve zu durchfahren, die sich vom Inneren des Abschnitts zu einem Eckbereich zwischen einer ersten Ableiterfahne und dem Aktivmaterial des Elektrodenstücks, dann in Förderrichtung zum Erzeugen einer Endkante des Aktivmaterials des Elektrodenstücks zwischen der ersten Ableiterfahne und einer zu dieser benachbarten zweiten Ableiterfahne und von dem Eckbereich zwischen der zweiten Ableiterfahne und dem Aktivmaterial in das Innere des Abschnitts hinein erstreckt und dort endet.

Die Steuerung ist insbesondere dazu eingerichtet, die Schneidkurven insbesondere 3-dimensional in Abhängigkeit der Bahngeschwindigkeit und der absoluten Position der Bahn - insbesondere auf der Fördereinrichtung - auszuwählen, zu errechnen und/oder einzustellen.

Es ist bevorzugt, dass die Steuerung dazu eingerichtet ist, die Schneidstrahlablenkungseinrichtung dazu zu veranlassen,
c1) mit dem Schneidstrahl eine Vereinzelungs-Schneidkurve zu durchfahren, die sich von außerhalb des Ableiterstreifens durch den Abschnitt quer durch das Elektrodensubstrat zum Vereinzeln des Elektrodenstücks erstreckt.

Es ist bevorzugt, dass die Steuerung dazu eingerichtet ist, die Schneideinrichtung und die Fördereinrichtung und die Abschnittsentfernungseinrichtung dazu zu veranlassen, das Schneidverfahren nach einer der voranstehenden Ausgestaltungen durchzuführen.

Die Abschnittsentfernungseinrichtung weist vorzugsweise eine Absaugung auf, die weiter vorzugsweise permanent während des Schneidvorganges läuft und somit nicht gesondert während des Schneidprozesses aktiv angesteuert werden muss. Bei einer bevorzugten Ausgestaltung ist eine laufende Absaugung für die Freigabe des Schneidvorganges, insbesondere jedes Laserschnitts, erforderlich.

Bei einigen Ausführungsformen weist die Schneidvorrichtung wenigstens eine zusätzliche Blaseinheit auf, die in Verbindung mit der Absaugung einen gerichteten Luftstrom erzeugt und zusätzlich die Strahlaustrittsbereiche an der Optik vor Verschmutzung schützt.

Gemäß einem weiteren Aspekt schafft die Erfindung ein Computerprogramm, enthaltend Anweisungen, die eine Schneidvorrichtung nach einer der voranstehenden Ausgestaltungen dazu veranlassen, das Schneidverfahren nach einer der voranstehenden Ausgestaltungen durchzuführen.

Gemäß einem weiteren Aspekt schlägt die Erfindung eine Verwendung des Schneidverfahrens, der Schneidvorrichtung oder des Computerprogramms nach einer der voranstehenden vorteilhaften Ausgestaltungen der Erfindung in einer Serienfertigung von Zellverbünden von Batterien, insbesondere für Elektrofahrzeuge vor.

Vorteilhafte Ausgestaltungen der Erfindung betreffen ein Laserschnittverfahren zum Vereinzeln von Elektroden. Vorzugsweise finden das Verfahren und die Vorrichtung Verwendung in einer Großserienanlage zur Herstellung von Batteriezellen. Die Batteriezellen sollen insbesondere in der Elektromobilität Verwendung finden, insbesondere für zumindest teilweise elektrisch oder vollelektrisch betriebene Fahrzeuge, wie insbesondere PKW oder LKW.

Bei bevorzugten Ausgestaltungen der Erfindung ist vorgesehen, dass zum Bilden wenigstens einer, mehrerer oder aller der Schneideinheiten der Schneideinrichtung ein Lasersystem aus einem gepulsten Laser und einen 3D-Scanner mit galvanometrischen Achsen aufgebaut wird.

Bei bevorzugten Ausgestaltungen der Erfindung ist vorgesehen, dass der Ableiterschnitt (Freischnitt) und der Trennschnitt auf einer Unterdruckwalze erfolgen. Somit wird die Bahn des Elektrodensubstrats zwischen beiden Schnitten nicht geführt und das Material wird auf der Unterdruckwalze, vorzugsweise einer Kassette davon, dauerhaft fixiert (ohne Relativbewegung).

Vorteilhafte Ausgestaltungen der Erfindung basieren auf dem Herstellverfahren "Zellverbund stapeln", wobei im oben beschriebenen Verfahren die Elektroden meist in mehreren Schritten vereinzelt werden (Notching & Trennschnitt).

Unter Berücksichtigung der hohen Sensibilität der Elektrodenbeschichtung gegenüber mechanischen Einflüssen, sehen vorteilhafte Ausgestaltungen eine Lösung vor, bei der die Elektrode möglichst in einem Schnitt vereinzelt werden kann.

Zudem ist einer der wesentlichen Einflussfaktoren auf die Leistungsfähigkeit einer Batteriezelle die Positioniergenauigkeit der einzelnen Lagen übereinander. Eine hohe Positioniergenauigkeit und Wiederholgenauigkeit des Schneideprozesses ermöglicht eine höhere Energiedichte in der Zelle. Hintergrund hierfür ist, dass der Überstand des Separators als Isolator zwischen den Elektroden durch eine höhere Schnittgenauigkeit minimiert werden kann. Der dadurch reduzierte Bauraum entspricht einer identischen Zelle mit höherer Energiedichte.

Besonders bevorzugte Ausgestaltungen der Erfindung beruhen auf dem bereits in [1] beschriebenen und gezeigten Trommelkonzept. Dort werden die Elektroden mittels Vakuums auf einzelnen Kassetten fixiert und vereinzelt. Bei bevorzugten Ausgestaltungen der Erfindung werden dabei als Schneideinheiten mindestens zwei in Reihe geschaltete Scanner vorgesehen, wobei gegenüber [1] verbesserte Schnittstrategien vorgesehen sind.

Bei einigen Ausführungsformen werden die vereinzelten Elektroden dabei in zwei Schritten erzeugt.

In einem Schritt erfolgt das Ausschneiden des Ableiterbereichs, d.h. der Bereich des Elektrodenmaterials, der nicht beschichtet ist.

Die Kontur der Ableiterfahne kann dabei mit Verrundungen an den Ecken oder auch mit scharfkantigen Ecken ausgeführt werden.

In einem weiteren Schritt werden die Elektroden vereinzelt. Dabei durchtrennt der Laserstrahl das Aktivmaterial. Auch hier können ggf. verrundete Ecken über die Schnittkurve eingebracht werden.

Die Reihenfolge der beiden Schnitte, so wie die Schnittrichtung können dabei aufgrund des symmetrischen Aufbaus beliebig angepasst werden.

Des Weiteren ist es denkbar, über eine Erweiterung der Anordnung mit einem dritten Laser bzw. Scanner auch zwei Elektrodenbahnen (oder eine Bahn mit zwei Ableiterstreifen, die vorgelagert mittig getrennt wird) synchron zu verarbeiten.

Bevorzugte Ausführungsformen haben wenigstens einen, mehrere oder alle der folgenden Vorteile:
- Kontur der Elektrode kann mit sehr geringen Toleranzen gefertigt werden, da die Elektroden zwischen beiden Prozessschritten nicht bewegt wird und auf einer Kassette fixiert ist.
- Über den Grundaufbau der Unterdruckwalze mit einem oder mehreren Schneideinheiten sind verschiedene Schnittstrategien und somit optimale Abstimmung des Schnittprozesses auf die Schnittposition im Raum, die Elektrodenkontur, das Elektrodenmaterial und die Laserparameter (Scanvorschub, Leistung, Pulsdauer, Pulswiederholfreqeunz, Fokuslage) möglich.
Schnittstrategien bevorzugter Ausführungsformen sind:
- Vollschnitt: Jede Schneideinheit (eine oder mehrere) trennen die Elektroden synchron aus der Bahn. Dabei kann je nach Prozessgeschwindigkeit und Material im Schnittprozess variiert werden.
   - Option 1: Die Scanner arbeiten Zeitsynchron, d.h. gleichzeitig
   - Option 2: Die Scanner arbeiten im optimalen Einstrahlwinkel, d.h. der Schnitt erfolgt quasi im mittleren Bereich des Arbeitsfeldes. Dabei können die Scanner auch im Schnittbereich der Arbeitsfelder "ineinander" arbeiten.

Bei einem Vollschnitt können:
- sehr hohe Taktzeiten erreicht werden, da die Schneideinheiten zwischen dem Konturschnitt und dem Trennschnitt nur einen minimalen Sprungweg (Strecke vom Schnittende zum Schnittanfang) zurücklegen muss.
- Zudem kann durch den synchronen Vollschnitt jeder einzelnen Schneideinheit, z.B. jedem einzelnen Laser, mehr Zeit für das Heraustrennen der Elektrode eingeräumt werden (Erhöhung des Part Pitches). Dadurch kann bei gleicher Schnittkantengüte die Vorschubgeschwindigkeit reduziert werden.
- der Sprungweg/Rücksprung kann abhängig von der Bahngeschwindigkeit und der Laser-Scangeschwindigkeit angepasst werden. Die Positionierung der Konturen auf der Zylinderoberfläche kann durch Verschieben softwareseitig erfolgen. Beim Vollschnitt mit Fokus Simultanschnitt kann zu einem Zeitpunkt t ein vollständiges Elektrodensheet vereinzelt werden.
- Der limitierende Faktor ist immer die effektive Laserbahnlänge in Verbindung mit der Bahngeschwindigkeit und des Scanfeldbereichs (= Kassettenabstand auf der Unterdruckwalze).

Andere Ausführungsformen können aber auch einen Schnitt in Reihe vorsehen, wobei eine Schneideinheit nur einen ersten Teil der Elektrodenkontur schneidet und eine weitere Schneideinheit einen Trennschnitt durchführt und dabei auch Abschnitte, die beim Schneiden der Elektrodenkontur entstehen, durchtrennt. Bei einem Vereinzelungsschnitt in Reihe kann einer der Laser mit anderen Parametern betrieben werden als der andere Laser. Das Arbeitsfeld des ersten Scanners kann auf einen minimalen Prozessbereich reduziert werden, somit können auch die Spotgröße reduziert und die Kantengüte erhöht werden.

Ausführungsbeispiele werden im Folgenden anhand der beigefügten Zeichnungen näher erläutert. Darin zeigt:
- Fig. 1: eine teils perspektivische Ansicht teils schematische Blockansicht einer Ausführungsform einer Schneidvorrichtung, die zum Durchführen eines Schneidverfahrens zum Schneiden von Elektrodenstücken ausgebildet ist;
- Fig. 2: eine Draufsicht auf eine erste Ausführungsform eines Elektrodenstücks;
- Fig. 3: eine Draufsicht auf eine zweite Ausführungsform eines Elektrodenstücks;
- Fig. 4: eine Draufsicht (in ebener Abwicklung) auf ein bahnförmiges Elektrodensubstrat beim Durchführen eines ersten Schritts einer bevorzugten Ausführungsform des Schneidverfahrens;
- Fig. 5: eine Ansicht wie in Fig. 4 beim Durchführen eines zweiten Schritts des Schneidverfahrens;
- Fig. 6: eine Draufsicht (in ebener Abwicklung) auf ein bahnförmiges Elektrodensubstrat als Übersichtsdarstellung zur Erläuterung des Schneidverfahrens;
- Fig. 7: eine Draufsicht (in ebener Abwicklung) auf das bahnförmige Elektrodensubstrat gemäß Fig. 6, wobei unterschiedlichen Schnitte 1 bis 4 des Schneidverfahrens der bevorzugten Ausführungsform angedeutet sind;
- Fig. 8: eine Draufsicht (in ebener Abwicklung) auf einen ein späteres Elektrodenstück bildendes Teil des bahnförmigen Elektrodensubstrats von Fig. 6 und 7 zur Erläuterung der Schnitte 1 und 2 des Schneidverfahrens der zweiten Ausführungsform;
- Fig. 9: eine Draufsicht wie in Fig. 8, wobei das Durchführen des Schnitts 3 des Schneidverfahrens der zweiten Ausführungsform dargestellt ist; und
- Fig. 10: eine Draufsicht ein Elektrodenbahnstück, an dem bereits die Kontur eines Ableiterstreifens nach Durchführen der des ersten Schritts des Schneidverfahrens der ersten Ausführungsform, hier insbesondere nach Durchführen der Schnitte 1 bis 3, ausgeschnitten ist, wobei das Durchführen eines Trennschnitts gemäß dem zweiten Schritt und insbesondere gemäß Schnitt 4 des Schneidverfahrens dargestellt ist.

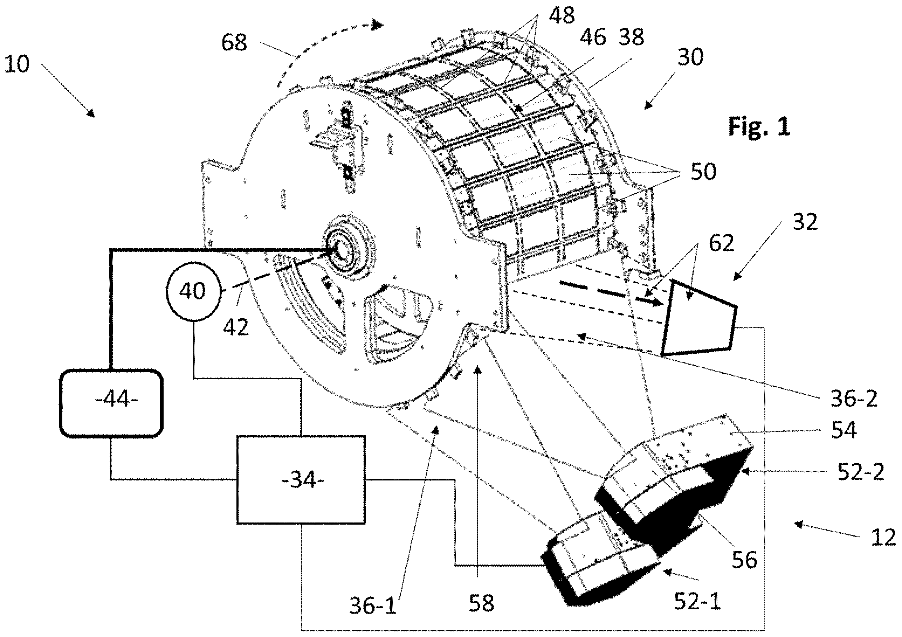

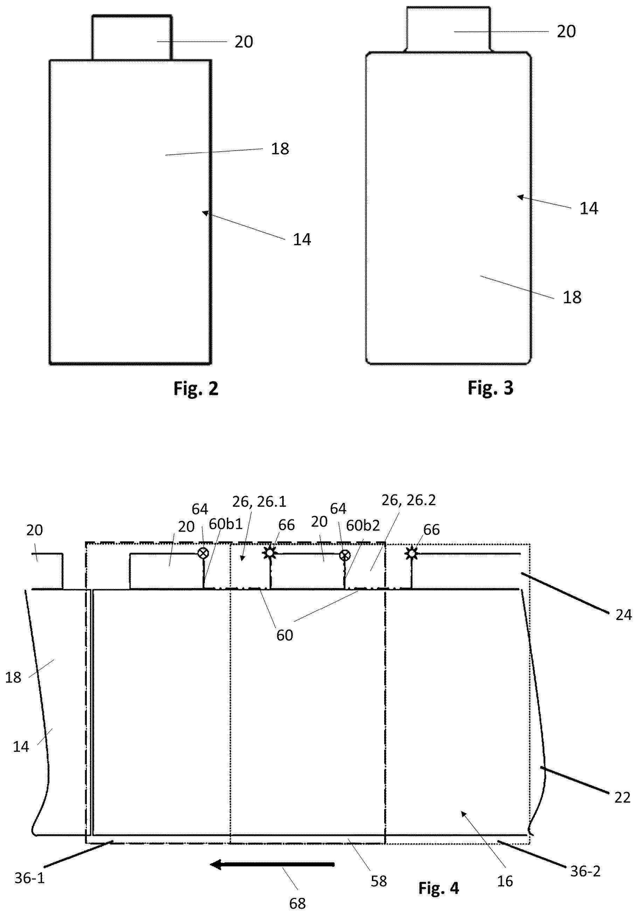

In Fig. 1 ist eine bevorzugte Ausführungsform einer Schneidvorrichtung 10 mit einer Schneideinrichtung 12 dargestellt, die im Zuge der Großserienherstellung von Batterien für Elektrofahrzeuge zum Bereitstellen von zu stapelnden Elektrodenstücken 14 verwendet wird, wie dies grundsätzlich aus [1] bekannt ist. In Fig. 2 und 3 sind bevorzugte Ausführungsformen von damit durch Schneiden zu bildenden Elektrodenstücken 14 dargestellt. In den Fig. 4 bis 10 sind unterschiedliche Schritte einer bevorzugten Ausführungsform eines Schneidverfahrens zum Bilden solcher Elektrodenstücke 14, vorzugsweise unter Verwendung der Schneidvorrichtung 10 von Fig. 1, dargestellt (das Schneidverfahren lässt sich aber mit anderen nicht näher dargestellten Schneidvorrichtungen, z.B. mit ebener Förderung, durchführen).

Es handelt sich dabei um ein im Zuge einer Serienfertigung von Zellverbünden von Batterien durchzuführendes Schneidverfahren zum Vereinzeln von Elektrodenstücken 14 von einem bahnförmigen Elektrodensubstrat 16 mittels einer Schneideinrichtung 12, um so Elektrodenstücke 14 mit einem flächigen Aktivmaterial 18 und einer seitlichen Ableiterfahne 20 zu erhalten. Bevorzugte Ausführungsformen der Elektrodenstücke 14 sind in Fig. 2 und 3 dargestellt.

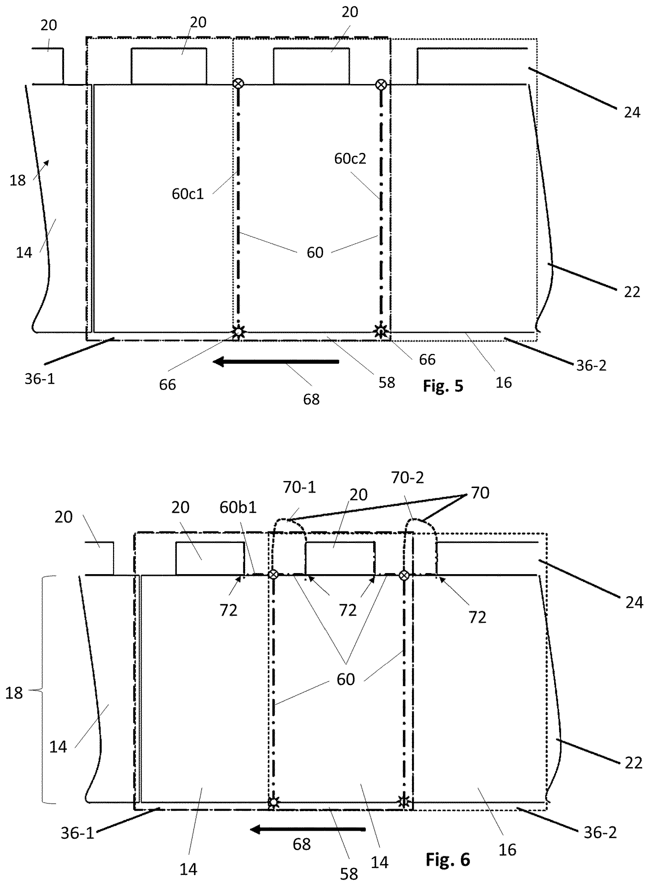

Wie insbesondere in den Fig. 4 bis 10 dargestellt, umfasst das Schneidverfahren dabei die Schritte:
a) Bereitstellen des bahnförmigen Elektrodensubstrats 16, welches einen vorzugsweise ein- oder zweiseitig mit Aktivmaterial 18 beschichteten Aktivmaterialbereich 22 und an wenigstens einer Seite des Aktivmaterialbereichs 22 einen vorzugsweise unbeschichteten Ableiterstreifen 24 aufweist, durch Fördern des bahnförmigen Elektrodensubstrats 16 zu der Schneideinrichtung 12;
b) Freischneiden wenigstens einer Ableiterfahne 20 aus dem Ableiterstreifen 24, wobei zumindest in Förderrichtung nach der Ableiterfahne 20 ein Abschnitt 26 nicht benötigten Materials des Ableiterstreifens 24 entsteht (siehe hierzu insbesondere Fig. 4 sowie Fig. 8 und 9),
c) Vereinzeln des mit freigeschnittener Ableiterfahne 20 versehenen Elektrodenstücks 14 durch Durchschneiden des Elektrodensubstrats 16 einschließlich Aktivmaterials 18 und auch des in Schritt b) ausgeschnittenen Abschnitts 26 (siehe hierzu insbesondere Fig. 5, 6 und 10) und
d) Entfernen der (insbesondere in Schritt c) durch Durchschneiden des Abschnitts 26 entstandenen) Abschnittsteile 28 aus der Schneideinrichtung 12.

Die in Fig. 1 dargestellte Ausführungsform der Schneidvorrichtung 10 ist demnach zum Aus- und Abschneiden von Elektrodenstücken 14 von einem bahnförmigen Elektrodensubstrat 16 ausgebildet, um insbesondere in Fig. 2 und 3 dargestellte Elektrodenstücke 14 mit flächigem Aktivmaterial 18 und einer seitlichen Ableiterfahne 20 für eine Serienfertigung von Zellverbünden von Batterien zu erhalten. Insbesondere ist die Schneidvorrichtung 10 zum Durchführen des vorgenannten Schneidverfahrens ausgebildet.

Gemäß Fig. 1 weist die Schneidvorrichtung 10 die Schneideinrichtung 12, eine Fördereinrichtung 30, eine Abschnittsentfernungseinrichtung 32 und eine Steuerung 34 auf.

Die Fördereinrichtung 30 ist zum Fördern des bahnförmigen Elektrodensubstrats 16 durch einen Arbeitsbereich 36-1, 36-2 der Schneideinrichtung 12 ausgebildet.

Bei der dargestellten Ausführung ist die Fördereinrichtung 30 als Unterdruckwalze 38, die mittels eines Drehantriebs 40 um eine Drehachse 42 drehbar ist und in der mittels einer Saugeinrichtung 44 ein Unterdruck erzeugbar ist, ausgeführt.

Die Unterdruckwalze 38 wird in der Darstellung von Fig. 1 im Uhrzeigersinn gedreht, die Drehrichtung gibt hier eine Förderrichtung 68 zum Fördern des in Fig. 1 nicht dargestellten Elektrodensubstrats 16 vor.

Die Umfangsfläche 46 weist mehrere Saugöffnungen 48 auf, so dass das Elektrodensubstrat 16 und die ausgeschnittenen Elektrodenstücke 14 daran durch Ansaugen festgehalten werden können. An der Umfangsfläche 46 sind mehrere Kassetten 50 beweglich angeordnet, so dass pro Elektrodenstück 14 eine Kassette 50 vorgesehen ist. Die Saugöffnungen 48 sind an weiter innen liegenden Flächenbereichen der Kassetten 50 außerhalb der später noch erläuterten Schneidkurven 60 vorgesehen.

Die Kassetten 50 sind mittels einer Kulissenführung (nicht dargestellt) abhängig von der Drehstellung in radialer Richtung beweglich, um die durch die Schneideinrichtung 12 abgeschnittenen Elektrodenstücke 14 räumlich voneinander zu trennen und an einer Abgabestelle insbesondere durch Abblasen oder Absaugen abzugeben. Insbesondere wird eine Unterdruckwalze 38, wie sie genauer in der Literaturstelle [1] beschrieben und gezeigt ist, verwendet. Wie in [1] beschrieben und gezeigt, wird das bahnförmige Elektrodensubstrat 16 zu der Unterdruckwalze 38 geliefert und mittels der Unterdruckwalze 38 durch den Arbeitsbereich 36-1, 36-2 der Schneideinrichtung 12 gefördert, so dass der gesamte Schneidvorgang wie er im Folgenden noch näher erläutert wird, wird auf der Unterdruckwalze 38 durchgeführt wird.

Das Durchschneiden (Trennschnitt) erfolgt insbesondere am Spaltbereich zwischen benachbarten Kassetten 50. Am seitlichen Randbereich der Umfangsfläche 38, wo der Ableiterstreifen 24 zu liegen kommt und wo das Freischneiden der Ableiterfahnen 20 erfolgt, sind bei der dargestellten Ausführung keine Saugöffnungen 48 vorgesehen.

Die Schneideinrichtung 12 weist wenigstens eine Schneideinheit 52-1, 52-2 auf, die eine Schneidstrahlerzeugungseinrichtung 54 zum Erzeugen eines Schneidstrahls und eine Schneidstrahlablenkungseinrichtung 56 aufweist. Die Steuerung 34 steuert die Schneideinheit 52-1, 52-2 an, um den Schneidstrahl entlang einer oder mehrerer vorbestimmter Schneidkurven 60, 60b1, 60b2, 60c1, 60c2, 60.1, 60.2, 60.3, 60.4 - von denen Beispiele in den Fig. 4 bis 10 gezeigt sind - über das mittels der Fördereinrichtung 30 geförderte Elektrodensubstrat 16 zu lenken.

Die Schneidstrahlerzeugungseinrichtung 54 ist bei den gezeigten Ausführungen durch einen Laser gebildet. Die Schneidstrahlablenkungseinrichtung 56 ist bei einigen Ausführungsformen durch einen Scanner, insbesondere 3D-Scanner mit galvanometrischen Achsen gebildet.

Bei dem dargestellten Ausführungsbeispiel weist die Schneideinrichtung 12 eine erste Schneideinheit 52-1 mit einem ersten Arbeitsbereich 36-1 und eine zweite Schneideinheit 52-2 mit einem zweiten Arbeitsbereich 36-2 auf. Die Schneideinheit 52-1, 52-2 ist jeweils durch ein Lasersystem aus einem gepulsten Laser und einen 3D-Scanner mit galvanometrischen Achsen aufgebaut, die den Schneidstrahl jeweils auf einen Punkt in dem zugeordneten Arbeitsbereich 36-1, 36-2 lenken können.

Die Schneideinheiten 52-1, 52-2 sind in Umfangsrichtung der Unterdruckwalze 38, und somit in Förderrichtung 68 der Fördereinrichtung 30 versetzt zueinander, insbesondere hintereinander angeordnet, wobei der erste und der zweite Arbeitsbereich 36-1, 36-2 in Förderrichtung 68 nacheinander angeordnet sein können oder wie dargestellt versetzt zueinander mit einem Überlappungsbereich 58 angeordnet sind.

Bei den dargestellten Ausführungen ist die erste Schneideinheit 52-1 in Förderrichtung 68 vorne angeordnet (unten in Fig. 1), während die zweite Schneideinheit 52-2 in Förderrichtung 68 hinten angeordnet ist (oben in Fig. 1). Die Definition "erste" und "zweite" ist dabei willkürlich gewählt, hier ist als "erste Schneideinheit 52-1" diejenige, die in Förderrichtung 68 weiter vorne schneidet, bezeichnet, in der Praxis durchläuft das Elektrodensubstrat 16 aber zunächst den Arbeitsbereich 36-2 der zweiten Schneideinheit 52-2 und dann den Arbeitsbereich 36-1 der ersten Schneideinheit 52-1.

Die Abschnittsentfernungseinrichtung 32 ist zum vollständigen Entfernen der Abschnitte 26 insbesondere durch Entfernen der kleineren Abschnittsteile 28 ausgebildet. Das Entfernen erfolgt am Ort und zur Zeit des Abschneidens der Abschnittsteile 28, vorzugsweise durch Absaugen oder Abblasen. Bei bevorzugten Ausführungsformen weist die Abschnittsentfernungseinrichtung 32 eine Absaugung 62 auf, die Partikel, welche beim Schneiden entstehen, von dem Arbeitsbereich 36-1, 36-2 und von der Unterdruckwalze 38 wegsaugen. Vorzugsweise läuft die Absaugung 62 permanent. Bevor ein Schneidvorgang gestartet wird, fragt die Steuerung 34 dann den Funktionszustand der Absaugung 62 ab und führt einen Schneidvorgang nur bei laufender Absaugung 62 aus.

Die Steuerung 34 ist weiter dazu ausgebildet, die Schneideinheiten 52-1, 52-2 zum Durchfahren der Schneidkurven 60, 60b1, 60b2, 60c1, 60c2, 60.1, 60.2, 60.3, 60.4, wie sie nachfolgend noch anhand der Fig. 4 bis 10 näher erläutert werden, anzusteuern.

Bei den Schneidkurven 60, 60b1, 60b2, 60c1, 60c2, 60.1, 60.2, 60.3, 60.4 handelt es sich um Laserbahnen, entlang denen der jeweilige Laserstrahl zum Schneiden geführt wird. Die Schneidkurven 60, 60b1, 60b2, 60c1, 60c2, 60.1, 60.2, 60.3, 60.4 werden durch die Steuerung 34 abhängig von Fördergeschwindigkeit - hier Drehgeschwindigkeit der Unterdruckwalze 38 - automatisch berechnet, um den Schneidvorgang jeweils während der Förderung durchzuführen. Weiter erfolgt durch die Steuerung 34 an dem mit dem Kreis mit Kreuz in Fig. 4 bis 10 bezeichneten Strahleintrittspunkten 64 (Anfang der jeweiligen Schneidkurve 60, 60b1, 60b2, 60c1, 60c2, 60.1, 60.2, 60.3, 60.4) ein Anschalten oder Einblenden des Schneidstrahls, hier Laserstrahls, und an den mit Sternsymbol in den Fig. 4 bis 10 bezeichneten Strahlaustrittspunkten 66 (Ende der jeweiligen Schneidkurve 60, 60b1, 60b2, 60c1, 60c2, 60.1, 60.2, 60.3, 60.4) ein Abschalten oder Ausblenden des Schneidstrahls, hier Laserstrahls.

Wie bereits erläutert, setzt sich das Lasersystem aus mindestens einer Laserstrahlquelle und mindestens einer optischen Ablenkeinheit zusammen. Nachdem der Vereinzelungsprozess auf der Unterdruckwalze 38 erfolgt, ist eine Ablenkung des Laserstrahls im Raum (inkl. Höhenverstellung der Arbeitsebene) vorgesehen. Bei bevorzugten Ausgestaltungen wird hierzu ein 3D-Scanner mit galvanometrischen Achsen verwendet.

Als Strahlquelle werden bei bevorzugten Ausführungsformen gepulste oder kontinuierliche Faserlaser verwendet.

Die Schneidkurve 60, 60b1, 60b2, 60c1, 60c2, 60.1, 60.2, 60.3, 60.4 oder Schnittkurve zur Erzeugung der einzelnen Elektroden 14 entsteht durch Synchronisierung der Drehbewegung der Unterdruckwalze 38 und der Schnittbewegung im Arbeitsbereich 36-1, 36-2 der Ablenkeinheit der Schneidstrahlablenkungseinrichtung 56.

Da - z.B. aufgrund spezifischer Werkstückeigenschaften (Formatgröße, Beschichtungsstärke, Beschichtungsmaterial, etc.) - die Schnittgeschwindigkeit variieren kann, sind zur Einhaltung der Taktzeit verschiedene Schnittstrategien entwickelt worden. Der Systemaufbau mit zwei (oder mehr) Schneideinheiten 52-1, 52-2 lässt verschiedene Schnittstrategien zu, die auch unterschiedliche Vorteile bringen.

Zudem können die Schnitte materialabhängig auch über mehrere Überfahrten umgesetzt werden.

Die Fig. 2 und 3 zeigen eine Übersicht über mögliche Elektrodenformen. Fig. 2 zeigt ein Elektrodenstück 14 mit scharfkantiger Kontur, während Fig. 3 ein Elektrodenstück 14 mit verrundeter Kontur zeigt.

In den Fig. 4 bis 10 sind Beispiele für Schneidkurven 60, 60b1, 60b2, 60c1, 60c2, 60.1, 60.2, 60.3, 60.4 für Schnittstrategien für synchrone Vereinzelungsschritte dargestellt.

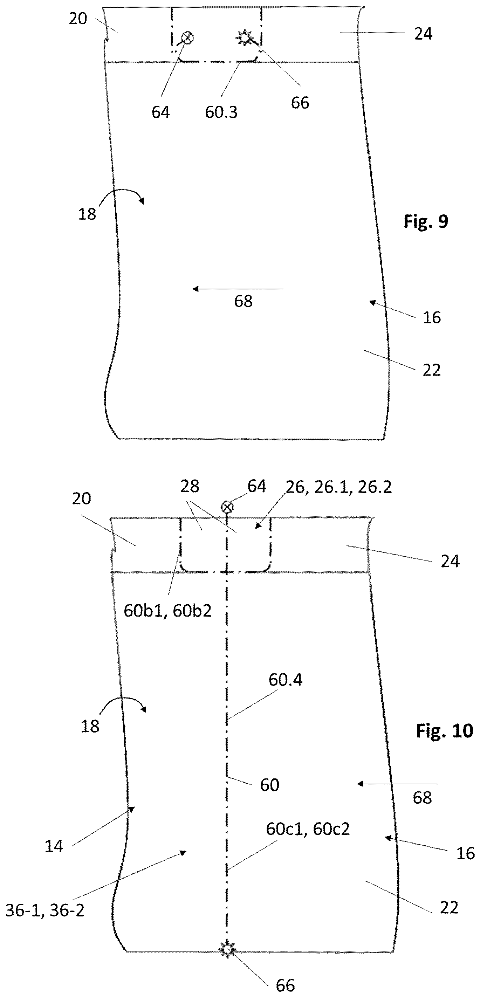

Dabei ist in Fig. 4 schematisch im Überblick ein Freischnitt 60b1, 60b2 der Ableiterfahne 20 durch die erste Schneideinheit 52-1 und die zweite Schneideinheit 52-2 dargestellt. Der Pfeil 68 gibt den Materialfluss oder mit anderen Worten die Förderrichtung der Fördereinrichtung 30 wieder. In Fig. 5 ist schematisch im Überblick der jeweilige Trennschnitt 60c1, 60c2 durch die erste Schneideinheit 52-1 und die zweite Schneideinheit 52-2 dargestellt (der genauere Verlauf des Trennschnitts 60c1, 60c2 ist in Fig. 10 gezeigt). In Fig. 6 ist schematisch als Übersichtsdarstellung die aus der Folge von Fig. 4 und 5 resultierende Schnittstrategie mit dem Sprung 70 und dem Sprungweg 70-1, 70-2 der ersten und zweiten Schneideinheit 52-1, 52-2 dargestellt.

Demnach wird bei der gezeigten Ausführungsform des Schneidverfahrens in Schritt b) mittels der ersten Schneideinheit 52-1 ein in Förderrichtung 68 vor der Ableiterfahne 20 befindlicher erster Abschnitt 26-1 ausgeschnitten und synchron oder zumindest zeitlich überlappend wird mittels der zweiten Schneideinheit 52-2 ein in Förderrichtung 68 hinter dieser Ableiterfahne 20 befindlicher zweiter Abschnitt 26-2 ausgeschnitten. Anschließend wird in Schritt c) mittels der ersten Schneideinheit 52-1 ein in Förderrichtung 68 gesehen vorderer Durchschnitt - hier der Trennschnitt 60c1 - durchgeführt und synchron oder zeitlich überlappend mittels der zweiten Schneideinheit 52-2 ein in Förderrichtung 68 gesehen hinterer Durchschnitt - hier der Trennschnitt 60c2 - durchgeführt.

Bei dieser Schnittstrategie arbeiten beide Schneideinheiten 52-1, 52-2 oder Scanner synchron. In der ersten Schnittphase wird der Ableiter - Ableiterfahne 20 - ausgeschnitten. Anschließend trennt der Scanner die Elektrode.

Ein Vorteil dieses Schnittprozesses liegt darin, dass - wie in Fig. 10 gezeigt - der Abschnitt 26 aus dem Ableiterstreifen 24, nachdem er im ersten Vereinzelungsschnitt von der Bahn getrennt wurde, durch den direkt folgenden Transversalschnitt auf Höhe des Spalts zwischen benachbarten Kassetten 50 in zwei Abschnittsteile 28 getrennt wird. Durch Teilung der Ableiter-Abschnitte 26 (Halbierung des abzusaugenden Gewichts) kann das Risiko reduziert werden, den Abschnitt 26 nicht vollständig aus der Prozesszone zu entfernen. Dies minimiert das Risiko einer Beeinflussung des Laserstrahls durch den Abschnitt 26, der so den Nachfolgeschnitt stören könnte. Nachdem die Abschnitte 26 während des Prozesses abgesaugt werden, kann somit der Abschnitt 26 nochmals halbiert und die Gefahr von negativen Einflüssen im Gesamtprozess kann erheblich reduziert werden

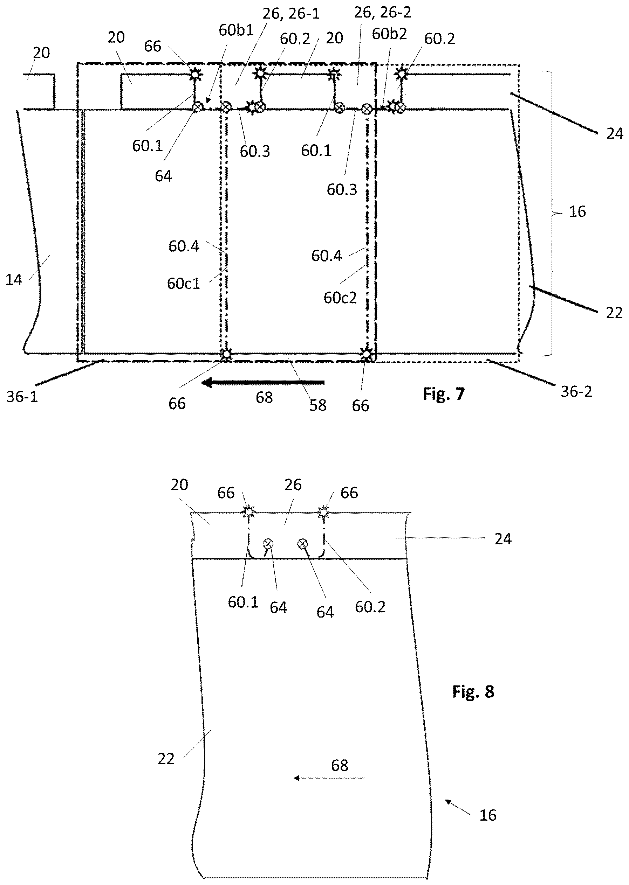

In der Fig. 7 sind ein 3-teiliger Schnitt des jeweiligen Freischnitts 60b1, 60b2 und der als vierter Schnitt durchzuführende Trennschnitt 60c1, 60c2 dargestellt. Jede Gesamtschneidkurve 60 der jeweiligen Schneideinheit 52-1, 52-2 weist die Einzelschneidkurven 60.1, 60.2, 60.3 und 60.4 auf.

In Fig. 8 sind die Teilschnitte 60.1 und 60.2 zum Freischneiden der Kanten in Richtung quer zur Förderrichtung 68 dargestellt. Der Schneidstrahl (z.B. Laser) sticht im Ecken- bzw. Radiusübergang von Aktivmaterialbereich zu Ableiterbereich ein und läuft dann nach oben aus dem Ableiterstreifen 24 heraus. Somit werden in diesen ersten Schnitten 60.1, 60.2 die beiden in Fig. 8 vertikal dargestellten Schenkel des Ableiters geschnitten. Bei der dargestellten Ausführungsform der Teilschnitte 60.1, 60.2 tritt der Schneidstrahl jeweils an einem Strahleintrittspunkt 66 im Inneren eines Bereichs des Ableiterstreifens 24, welcher Bereich später den zu entsorgenden Abschnitt 26 bildet, ein. Somit sind eventuelle Beeinträchtigungen des Materials beim Eintritt des Strahls unbeachtlich, da dieser Bereich des Materials ohnehin als Abschnitt 26 entsorgt wird. Vom Strahleintrittspunkt 66 wird der Schneidstrahl dann zu dem Eckbereich 72 zwischen dem Aktivmaterial 18 und der freizuschneidenden Kante der Ableiterfahne 20 geführt, dort kann - ja nach Kontur der Elektrode 14 - eine Rundung ausgeführt werden. Dann wird der Schneidstrahl vom Eckbereich 72 durch den Ableiterstreifen 24 nach außen geführt, um die Kante freizuschneiden und dann ausgeschaltet.

Bei dem in Fig. 9 gezeigten Teilschnitt 60.3 des Freischnitts 60b1, 60b2 wird der Abschnitt 26 entlang der sich in Förderrichtung 68 erstreckenden Grenze des Aktivmaterials 18 abgeschnitten. Auch hier tritt der Schneidstrahl im Inneren des späteren Abschnitts 26 ein, wird dann zu dem Eckbereich 72 geführt und dann entlang der Grenze geführt. Anschließend wird der Schneidstrahl wiederum ins Innere des Abschnitts 26 geführt und dann abgeschaltet oder ausgeblendet.

Der Laser sticht also wiederrum im Ecken- bzw. Radiusübergang ein, allerdings nun aus der entgegengesetzten Richtung. Anschließend erfolgt der Schnitt parallel zur Beschichtungskante, der dann wiederrum im Eckenbereich ausläuft.

Somit ist der Abschnitt 26 zwischen zwei Ableiterfahnen 20 komplett herausgetrennt.

Fig. 10 zeigt den anschließend durchzuführenden Teilschnitt 60.4 zum Durchführen des Trennschnitts 60c1 oder 60c2 in größerem Detail. Der Schneidstrahl wird hier von außerhalb des Elektrodensubstrats 16 zunächst durch den Abschnitt 26 des Ableiterstreifens 24 und anschließend durch den Aktivmaterialbereich 22 geführt, um im Wesentlichen quer zur Förderrichtung das in Förderrichtung vorne liegende Elektrodenstück 14 von dem verbleibenden Elektrodensubstrat 16 zu trennen.

Dabei trennt der Laser die Elektroden in einem Transversalschnitt, wobei er oberhalb des herausgetrennten Bereichs - Abschnitt 26 - einsticht und diesen somit zusätzlich halbiert.

Somit wird gemäß Fig. 7 und 8 der Schritt b) des Freischneidens 60b1, 60b2 der Ableiterfahne 20 vorzugsweise mit den Schritten durchgeführt:
b1) Lenken des wenigstens einen Schneidstrahls entlang einer vorderen Schneidkurve 60.1, die sich von einem Strahleintrittspunkt 66 in dem Inneren des den späteren nicht benötigten Abschnitt 26 des Ableiterstreifens 24 bildenden Bereichs des Ableiterstreifens 24 aus zu einem vorderen Eckbereich 72 zwischen einer bezüglich Förderrichtung 68 vorderen Ableiterfahne 20 und dem Aktivmaterial 18 des Elektrodenstücks 14 erstreckt und sich dann von dem vorderen Eckbereich 72 in einer Richtung quer zu der Förderrichtung 68 nach außen erstreckt, um die vordere Ableiterfahne 20 von dem verbleibenden nicht benötigten Abschnitt 26 des Ableiterstreifens 24 zu trennen;
b2) Lenken des wenigstens einen Schneidstrahls entlang einer hinteren Schneidkurve 60.2, die sich von einem Strahleintrittspunkt 66 in dem Inneren des den späteren nicht benötigten Abschnitt 26 des Ableiterstreifens 24 bildenden Bereich des Ableiterstreifens 24 aus zu einem hinteren Eckbereich 72 zwischen einer bezüglich Förderrichtung 68 hinteren Ableiterfahne 20 und dem Aktivmaterial 18 des Elektrodenstücks erstreckt und sich dann von dem hinteren Eckbereich 72 in einer Richtung quer zu der Förderrichtung 68 nach außen erstreckt, um die hintere Ableiterfahne 20 von dem verbleibenden nicht benötigten Abschnitt 20 des Ableiterstreifens 24 zu trennen;
b3) Lenken des Schneidstrahls entlang einer mittleren Schneidkurve 60.3, die sich vom Inneren des Abschnitts 26 zu einem Eckbereich 72 zwischen einer ersten Ableiterfahne 20 und dem Aktivmaterial 18 des Elektrodenstücks 14, dann in einer Richtung parallel zur Förderrichtung 68 (z.B. erfolgt in Fig. 9 der Schnitt 60.3 entgegen der Förderrichtung 68) zum Erzeugen einer Endkante des Aktivmaterials 18 des Elektrodenstücks 14 zwischen der ersten Ableiterfahne 20 und einer zu dieser benachbarten zweiten Ableiterfahne 20 und von dem Eckbereich 72 zwischen der zweiten Ableiterfahne 20 und dem Aktivmaterial 18 in das Innere des Abschnitts 26 hinein erstreckt und dort endet.

Gemäß Fig. 10 wird der Schritt c) des Abtrennens - Trennschnitt 60c1, 60c2 - des Elektrodenstücks 14 vorzugsweise mit dem Schritt durchgeführt:
c1) Lenken des wenigstens einen Schneidstrahls entlang einer Vereinzelungs-Schneidkurve 60.4, die sich von außerhalb des Ableiterstreifens 24 durch den Abschnitt 26 quer durch das Elektrodensubstrat 16 zum Vereinzeln des Elektrodenstücks 14 erstreckt.

Die Steuerung 34 der Schneidvorrichtung 10 ist dazu ausgebildet, die Schneidvorrichtung 10 automatisch zum Durchführen des vorherstehend beschriebenen Schneidverfahrens anzusteuern. Die Steuerung 34 ist insbesondere als elektronische Steuerung, insbesondere als Rechnereinheit oder Computer mit entsprechendem Computerprogramm, das die entsprechenden Anweisungen enthält ausgebildet.

Das Schneidverfahren wird insbesondere als Teilprozess bei der Großserienherstellung von Hochvolt-Batterien für Elektrofahrzeuge durchgeführt- Die Schneidvorrichtung 10 bildet vorzugsweise Teil einer entsprechenden Herstellanlage. Für nähere Einzelheiten wird auf die Literaturstelle [1] verwiesen.

Um ein Vereinzeln von Elektrodenstücken für eine Großserienherstellung von Batteriezellen für Elektrofahrzeuge oder dergleichen zu verbessern, sind ein Schneidverfahren und eine Schneidvorrichtung (10) beschrieben worden, bei denen während einer Förderung eines Elektrodensubstrats (16) durch eine Schneideinrichtung (12) wenigstens eine Ableiterfahne (20) aus einem Ableiterstreifen eines Elektrodensubstrats (16) freigeschnitten wird, wobei in einer Förderrichtung (68) gesehen nach der Ableiterfahne (20) ein Abschnitt (26) nicht benötigten Materials des Ableiterstreifens (24) entsteht, und dann die mit freigeschnittener Ableiterfahne (20) versehenen Elektrodenstücks (14) durch Durchschneiden des Elektrodensubstrats (16) einschließlich Aktivmaterials (18) und auch des in Schritt b) ausgeschnittenen Abschnitts (26) vereinzelt werden. Dadurch wird der Abschnitt (26) verkleinert und lässt sich sicherer aus der Schneideinrichtung (12) entfernen.

### Bezugszeichenliste:

- 10: Schneidvorrichtung
- 12: Schneideinrichtung
- 14: Elektrodenstück
- 16: bahnförmiges Elektrodensubstrat
- 18: Aktivmaterial
- 20: Ableiterfahne
- 22: Aktivmaterialbereich
- 24: Ableiterstreifen
- 26: Abschnitt
- 26-1: erster Abschnitt
- 26-2: zweiter Abschnitt
- 28: Abschnittsteil
- 30: Fördereinrichtung
- 32: Abschnittsentfernungseinrichtung
- 34: Steuerung
- 36-1: erster Arbeitsbereich
- 36-2: zweiter Arbeitsbereich
- 38: Unterdruckwalze
- 40: Drehantrieb
- 42: Drehachse
- 44: Saugeinrichtung
- 46: Umfangsfläche
- 48: Saugöffnung
- 50: Kassetten
- 52-1: erste Schneideinheit
- 52-2: zweite Schneideinheit
- 54: Schneidstrahlerzeugungseinrichtung
- 56: Schneidstrahlablenkungseinrichtung
- 58: Überlappungsbereich
- 60: Schneidkurve
- 60b1: Schneidkurve für Freischnitt durch erste Schneideinheit
- 60b2: Schneidkurve für Freischnitt durch zweite Schneideinheit
- 60c1: Schneidkurve für Trennschnitt durch erste Schneideinheit
- 60c2: Schneidkurve für Trennschnitt durch zweite Schneideinheit
- 60.1: Schneidkurve erster Teilschnitt (vordere Schneidkurve)
- 60.2: Schneidkurve zweiter Teilschnitt (hintere Schneidkurve)
- 60.3: Schneidkurve dritter Teilschnitt (mittlere Schneidkurve)
- 60.4: Schneidkurve vierter Teilschnitt (Trennschnitt zum Durchschneiden, Transversalschnitt)
- 62: Absaugung
- 64: Strahleintrittspunkt
- 66: Strahlaustrittspunkt
- 68: Förderrichtung (Materialfluss)
- 70: Sprung
- 70-1: Sprungweg erste Schneideinheit
- 70-2: Sprungweg zweite Schneideinheit
- 72: Eckbereich

## Patentansprüche

1. Im Zuge einer Serienfertigung von Zellverbünden von Batterien durchzuführendes Schneidverfahren zum Vereinzeln von Elektrodenstücken (14) von einem bahnförmigen Elektrodensubstrat (16) mittels einer Schneideinrichtung (12), um so Elektrodenstücke (14) mit einem flächigen Aktivmaterial (18) und einer seitlichen Ableiterfahne (20) zu erhalten, mit den Schritten:
a) Bereitstellen des bahnförmigen Elektrodensubstrats (16), welches einen Aktivmaterialbereich (22) und an wenigstens einer Seite des Aktivmaterialbereichs (22) einen Ableiterstreifen (24) aufweist, durch Fördern des bahnförmigen Elektrodensubstrats (16) zu der Schneideinrichtung (12);
b) Freischneiden wenigstens einer Ableiterfahne (20) aus dem Ableiterstreifen, wobei in Förderrichtung (68) vor und/oder nach der Ableiterfahne (20) ein Abschnitt (26) nicht benötigten Materials des Ableiterstreifens (24) entsteht,
**gekennzeichnet durch**
c) Vereinzeln des mit freigeschnittener Ableiterfahne (20) versehenen Elektrodenstücks (14) **durch** Durchschneiden des Elektrodensubstrats (16) einschließlich Aktivmaterials (18) und auch des in Schritt b) ausgeschnittenen Abschnitts (26), so dass **durch** das Durchschneiden der Abschnitt (26) verkleinert und in mehrere Abschnittsteile (28) zerlegt wird, und
d) Entfernen der Abschnittsteile (28) aus der Schneideinrichtung (12).

2. Schneidverfahren nach Anspruch 1, **dadurch gekennzeichnet,**
**dass** Schritt a) wenigstens den Schritt umfasst:
a1) Fördern des Elektrodensubstrats (16) durch zwei hintereinander und/oder überlappend angeordnete Arbeitsbereiche (36-1, 36-2) einer ersten Schneideinheit (52-1) und einer zweiten Schneideinheit (52-2) der Schneideinrichtung (12);
und **dass** in Schritt b) mittels der ersten Schneideinheit (52-1) ein in Förderrichtung vor der Ableiterfahne (20) befindlicher erster Abschnitt (26, 26-1) ausgeschnitten wird und gleichzeitig, synchron oder zeitlich überlappend mittels der zweiten Schneideinheit (52-2) ein in Förderrichtung hinter dieser Ableiterfahne (20) befindlicher zweiter Abschnitt (26, 26-2) ausgeschnitten wird und/oder
**dass** in Schritt c) mittels der ersten Schneideinheit (52-1) ein in Förderrichtung (68) gesehen vorderer Durchschnitt (60c1) durchgeführt wird und gleichzeitig, synchron oder zumindest zeitlich überlappend mittels der zweiten Schneideinheit (52-2) ein in Förderrichtung (68) gesehen hinterer Durchschnitt (60c2) durchgeführt wird.

3. Schneidverfahren nach einem der voranstehenden Ansprüche, **gekennzeichnet durch**
3.1 Erzeugen wenigstens eines Schneidstrahls, insbesondere Laserstrahls, und
3.2 Lenken des wenigstens einen Schneidstrahls entlang von Schneidkurven (60, 60b1, 60b2, 60c1, 60c2, 60.1, 60.2, 60.3, 60.4), um die Schritte b) und c) durchzuführen.

4. Schneidverfahren nach Anspruch 3, **dadurch gekennzeichnet, dass** Schritt b) wenigstens einen oder mehrere der Schritte umfasst:
b1) Lenken des wenigstens einen Schneidstrahls entlang einer vorderen Schneidkurve (60.1), die sich von einem Strahleintrittspunkt (64) in dem Inneren eines den späteren nicht benötigten Abschnitt (26) bildenden Bereichs des Ableiterstreifens (24) aus zu einem vorderen Eckbereich (72) zwischen einer bezüglich Förderrichtung (68) vorderen Ableiterfahne (20) und dem Aktivmaterial (18) des Elektrodenstücks (14) erstreckt und sich dann von dem vorderen Eckbereich (72) in einer Richtung quer zu der Förderrichtung (68) nach außen erstreckt, um die vordere Ableiterfahne (20) von dem verbleibenden nicht benötigten Abschnitt (26) des Ableiterstreifens (24) zu trennen;
b2) Lenken des wenigstens einen Schneidstrahls entlang einer hinteren Schneidkurve (60.2), die sich von einem Strahleintrittspunkt (64) in dem Inneren des den späteren nicht benötigten Abschnitt (26) bildenden Bereich des Ableiterstreifens (24) aus zu einem hinteren Eckbereich (72) zwischen einer bezüglich Förderrichtung (68) hinteren Ableiterfahne (20) und dem Aktivmaterial (18) des Elektrodenstücks (14) erstreckt und sich dann von dem hinteren Eckbereich (72) in einer Richtung quer zu der Förderrichtung (68) nach außen erstreckt, um die hintere Ableiterfahne (20) von dem verbleibenden nicht benötigten Abschnitt (26) des Ableiterstreifens (24) zu trennen;
b3) Lenken des Schneidstrahls entlang einer mittleren Schneidkurve (60.3), die sich vom Inneren des Abschnitts (26) zu einem Eckbereich (72) zwischen einer ersten Ableiterfahne (20) und dem Aktivmaterial (18) des Elektrodenstücks (14), dann in oder gegen Förderrichtung (68) zum Erzeugen einer Endkante des Aktivmaterials (18) des Elektrodenstücks (14) zwischen der ersten Ableiterfahne (20) und einer zu dieser benachbarten zweiten Ableiterfahne (20) und von dem Eckbereich (72) zwischen der zweiten Ableiterfahne (20) und dem Aktivmaterial (18) in das Innere des Abschnitts (26) hinein erstreckt und dort endet.

5. Schneidverfahren nach einem Ansprüche 3 oder 4, **dadurch gekennzeichnet, dass** Schritt c) umfasst:
c1) Lenken des wenigstens einen Schneidstrahls entlang einer Vereinzelungs-Schneidkurve (60.4), die sich von außerhalb des Ableiterstreifens (24) durch den Abschnitt (26) quer durch das Elektrodensubstrat (16) zum Vereinzeln des Elektrodenstücks (14) erstreckt.

6. Schneidverfahren nach Anspruch 4 und 5, **gekennzeichnet durch** wenigstens eines oder mehrere der folgenden Merkmale:
6.1 dass der Schneidstrahl die Schneidkurven (60b1, 60b2, 60c1, 60c2, 60.1, 60.2, 60.3, 60.4) nacheinander durchfährt, vorzugsweise unter Abschaltung oder Ausblendung beim Sprung (70-1, 70-2) von Schneidkurve zu Schneidkurve,
6.2 dass die mittlere Schneidkurve (60.3) nach der vorderen und hinteren Schneidkurve (60.1, 60.2) durchfahren wird;
6.3 dass die Schritte in der Reihenfolge b1), b2), b3) und c1) durchgeführt werden.

7. Schneidverfahren nach einem der voranstehenden Ansprüche, **dadurch gekennzeichnet, dass** d) umfasst:
Abblasen und/oder Absaugen der Abschnittsteile (28).

8. Schneidvorrichtung (10) zum Aus- und Abschneiden von Elektrodenstücken (14) von einem bahnförmigen Elektrodensubstrat (16), um Elektrodenstücke (14) mit flächigem Aktivmaterial (18) und einer seitlichen Ableiterfahne (20) für eine Serienfertigung von Zellverbünden von Batterien zu erhalten, wobei die Schneidvorrichtung (10) umfasst:
eine Schneideinrichtung (12),
eine Fördereinrichtung (30) zum Fördern von bahnförmigen Elektrodensubstrat (16), welches einen Aktivmaterialbereich (22) und an wenigstens einer Seite des Aktivmaterialbereichs (22) einen Ableiterstreifen (24) aufweist, durch einen Arbeitsbereich (36-1, 36-2) der Schneideinrichtung (12),
eine Abschnittsentfernungseinrichtung (32) zum Entfernen von während des Schneidens entstehender nicht benötigter Abschnitte (26),
und eine Steuerung (34), die dazu eingerichtet ist, die Schneideinrichtung (12) dazu zu veranlassen, wenigstens eine Ableiterfahne (20) aus dem Ableiterstreifen (24) freizuschneiden, wobei in Förderrichtung (68) nach der Ableiterfahne (20) ein Abschnitt (26) nicht benötigten Materials des Ableiterstreifens (24) entsteht, **dadurch gekennzeichnet, dass** die Steuerung (34) weiter dazu eingerichtet ist,
einen Durchschnitt (60c1, 60c2, 60.4) sowohl durch das mit der freigeschnittenen Ableiterfahne (20) versehene Elektrodenstück (14) als auch durch den ausgeschnittenen Abschnitt (26) durchzuführen, um das Elektrodenstück (14) zu vereinzeln und den Abschnitt (26) in mehrere Abschnittsteile (28) aufzuteilen, um diese durch die Abschnittsentfernungseinrichtung (32) zu entfernen.

9. Schneidvorrichtung (10) nach Anspruch 8, **dadurch gekennzeichnet, dass** die Schneideinrichtung (12) wenigstens eine Schneideinheit (52-1, 52-2) aufweist, die eine Schneidstrahlerzeugungseinrichtung (54) zum Erzeugen eines Schneidstrahls, insbesondere einen Laser, und eine Schneidstrahlablenkungseinrichtung (56) aufweist, wobei die Steuerung (34) dazu eingerichtet ist, die Schneideinheit (52-1, 52-2) dazu zu veranlassen, den Schneidstrahl entlang einer oder mehrerer vorbestimmter Schneidkurven (60, 60b1, 60b2, 60c1, 60c2, 60.1, 60.2, 60.3, 60.4) über das mittels der Fördereinrichtung (30) geförderte Elektrodensubstrat (16) zu lenken.

10. Schneidvorrichtung (10) nach einem der Ansprüche 8 oder 9, **dadurch gekennzeichnet, dass** die Schneideinrichtung (12) eine erste Schneideinheit (52-1) mit einem ersten Arbeitsbereich (36-1) und eine zweite Schneideinheit (52-2) mit einem zweiten Arbeitsbereich (36-2) aufweist, die in Förderrichtung (68) der Fördereinrichtung (30) hintereinander und/oder überlappend angeordnet sind,
und dass die Steuerung (34) dazu eingerichtet ist, die Schneideinrichtung (12) dazu zu veranlassen,
mittels der ersten Schneideinheit (52-1) einen in Förderrichtung (68) vor der Ableiterfahne (20) befindlichen ersten Abschnitt (26, 26-1) auszuschneiden und gleichzeitig, synchron oder zeitlich überlappend mittels der zweiten Schneideinheit (52-2) ein in Förderrichtung (68) hinter dieser Ableiterfahne (20) befindlichen zweiten Abschnitt (26, 26-2) auszuschneiden, und/oder
mittels der ersten Schneideinheit (52-1) ein in Förderrichtung (68) gesehen vorderen Durchschnitt (60c1) durchzuführen und gleichzeitig, synchron oder zumindest zeitlich überlappend mittels der zweiten Schneideinheit (52-2) einen in Förderrichtung (68) gesehen hinteren Durchschnitt (60c2) durchzuführen.

11. Schneidvorrichtung (10) nach Anspruch 9 oder 10, **dadurch gekennzeichnet, dass** die Steuerung (34) dazu eingerichtet ist, die Schneidstrahlablenkungseinrichtung (56) dazu zu veranlassen,
b1) mit dem Schneidstrahl eine vordere Schneidkurve (60.1) zu durchfahren, die sich von einem Strahleintrittspunkt (64) in dem Inneren eines den späteren nicht benötigten Abschnitt (26) bildenden Bereichs des Ableiterstreifens (24) aus zu einem vorderen Eckbereich (72) zwischen einer bezüglich Förderrichtung (68) vorderen Ableiterfahne (20) und dem Aktivmaterial (18) des Elektrodenstücks (14) erstreckt und sich dann von dem vorderen Eckbereich (72) in einer Richtung quer zu der Förderrichtung (68) nach außen erstreckt, um die vordere Ableiterfahne (20) von dem verbleibenden nicht benötigten Abschnitt (26) des Ableiterstreifens (24) zu trennen; und/oder
b2) mit dem Schneidstrahl eine hintere Schneidkurve (60.2) zu durchfahren, die sich von einem Strahleintrittspunkt (64) in dem Inneren des den späteren nicht benötigten Abschnitt (26) bildenden Bereich des Ableiterstreifens (24) aus zu einem hinteren Eckbereich (72) zwischen einer bezüglich Förderrichtung (68) hinteren Ableiterfahne (20) und dem Aktivmaterial (18) des Elektrodenstücks (14) erstreckt und sich dann von dem hinteren Eckbereich (72) in einer Richtung quer zu der Förderrichtung (68) nach außen erstreckt, um die hintere Ableiterfahne (20) von dem verbleibenden nicht benötigten Abschnitt (26) des Ableiterstreifens (24) zu trennen; und/oder
b3) mit dem Schneidstrahl eine mittlere Schneidkurve (60.3) zu durchfahren, die sich vom Inneren des Abschnitts (26) zu einem Eckbereich (72) zwischen einer ersten Ableiterfahne (20) und dem Aktivmaterial (18) des Elektrodenstücks (14), dann in oder gegen Förderrichtung (68) zum Erzeugen einer Endkante des Aktivmaterials (18) des Elektrodenstücks (14) zwischen der ersten Ableiterfahne (20) und einer zu dieser benachbarten zweiten Ableiterfahne (20) und von dem Eckbereich (72) zwischen der zweiten Ableiterfahne (20) und dem Aktivmaterial (18) in das Innere des Abschnitts (26) hinein erstreckt und dort endet.

12. Schneidvorrichtung nach einem der Ansprüche 9 bis 11, **dadurch gekennzeichnet, dass** die Steuerung (34) dazu eingerichtet ist, die Schneidstrahlablenkungseinrichtung dazu zu veranlassen, c1) mit dem Schneidstrahl eine Vereinzelungs-Schneidkurve (60c1, 60c2, 60.4) zu durchfahren, die sich von außerhalb des Ableiterstreifens (24) durch den Abschnitt (26) quer durch das Elektrodensubstrat (16) zum Vereinzeln des Elektrodenstücks (14) erstreckt.

13. Schneidvorrichtung (10) nach einem der Ansprüche 8 bis 12, **dadurch gekennzeichnet, dass** die Steuerung (34) dazu eingerichtet ist, die Schneideinrichtung (12), die Fördereinrichtung (30) und die Abschnittsentfernungseinrichtung (32) dazu zu veranlassen, das Schneidverfahren nach einem der Ansprüche 1 bis 7 durchzuführen.

14. Computerprogramm, enthaltend Anweisungen, die eine Schneidvorrichtung (10) nach einem der Ansprüche 8 bis 13 dazu veranlassen, das Schneidverfahren nach einem der Ansprüche 1 bis 7 durchzuführen.

15. Verwendung des Schneidverfahrens nach einem der Ansprüche 1 bis 7, der Schneidvorrichtung (10) nach einem der Ansprüche 8 bis 14 oder des Computerprogramms nach Anspruch 14 in einer Serienfertigung von Zellverbünden von Batterien, insbesondere für Elektrofahrzeuge.

## Claims

1. A cutting method to be carried out in the course of a series production of cell composites of batteries for singulating electrode pieces (14) from a web-like electrode substrate (16) using cutting means (12), so as to obtain electrode pieces (14) with a flat active material (18) and a lateral arrester tab (20), comprising the steps of:
a) providing the web-like electrode substrate (16), which has an active material region (22) and an arrester strip on at least one side of the active material region (22), by conveying the web-like electrode substrate (16) to the cutting means (12);
b) cutting at least one arrester tab (20) free from the arrester strip, a portion (26) of unneeded material of the arrester strip (24) being produced before and/or after the arrester tab (20) in the conveying direction (68),
**characterized by**
c) singulating the electrode piece (14) provided with the arrester tab (20) cut free by cutting through the electrode substrate (16) inclusive of the active material (18) and also portion (26) cut out in step b), so that portion (26), by being cut through, is reduced in size and decomposed into several portion parts (28), and
d) removing the portion parts (28) from the cutting means (12).

2. Cutting method according to claim 1, **characterized in that** step a) comprises at least the step of:
a1) conveying the electrode substrate (16) through two successive and/or overlapping working regions (36-1, 36-2) of a first cutting unit (52-1) and a second cutting unit (52-2) of the cutting means (12);
and **in that** in step b) a first portion (26, 26-1) located before the arrester tab (20) in the conveying direction is cut out by means of the first cutting unit (52-1) and, simultaneously, synchronously or with a time overlap, a second portion (26, 26-2) located behind that arrester tab (20) in the conveying direction is cut out by means of the second cutting unit (52-2), and/or
that in step c) a front transection (60c1), viewed in the conveying direction (68), is made by means of the first cutting unit (52-1) and, simultaneously, synchronously or at least with a time overlap, a rear transection (60c2), viewed in the conveying direction (68), is made by means of the second cutting unit (52-2).

3. Cutting method according to any one of the preceding claims, **characterized by**
3.1 generating at least one cutting beam, in particular a laser beam, and
3.2 directing the at least one cutting beam along cutting curves (60, 60b1, 60b2, 60c1, 60c2, 60.1, 60.2, 60.3, 60.4) in order to carry out steps b) and c).

4. Cutting method according to claim 3, **characterized in that** step b) comprises at least one or more of the steps:
b1) directing the at least one cutting beam along a front cutting curve (60.1) which extends from a beam entry point (64) in the interior of a region of the arrester strip (24) forming the later unneeded portion (26) to a front corner region (72) between an arrester tab (20) which is at the front with respect to the conveying direction and the active material (18) of the electrode piece (14) and then extends outwards from the front corner region (72) in a direction transverse to the conveying direction (68), in order to separate the front arrester tab (20) from the remaining unneeded portion (26) of the arrester strip (24);
b2) directing the at least one cutting beam along a rear cutting curve (60.2) which extends from a beam entry point (64) in the interior of the region of the arrester strip (24) forming the later unneeded portion (26) to a rear corner region (72) between an arrester tab (20) which is at the rear with respect to the conveying direction (68) and the active material (18) of the electrode piece (14) and then extends outwards from the rear corner region (72) in a direction transverse to the conveying direction (68) to separate the rear arrester tab (20) from the remaining unneeded portion (26) of the arrester strip (24);
b3) directing the cutting beam along a middle cutting curve (60.3) which extends from the interior of the portion (26) to a corner region (72) between a first arrester tab (20) and the active material (18) of the electrode piece (14), then extends in or against the conveying direction (68) to create an end edge of the active material (18) of the electrode piece (14) between the first arrester tab (20) and a second arrester tab (20) adjacent to the first, and extends from the corner region (72) between the second arrester tab (20) and the active material (18) into the interior of the portion (26) and ends there.

5. Cutting method according to any one of claims 3 or 4, **characterized in that** step c) comprises:
c1) directing the at least one cutting beam along a singulation cutting curve (60.4) which extends from outside the arrester strip (24) through portion (26) transversely through the electrode substrate (16) for singulating the electrode piece (14).

6. Cutting method according to claims 4 and 5, **characterized by** at least one or more of the following features:
6.1 that the cutting beam successively traverses the cutting curves (60b1, 60b2, 60c1, 60c2, 60.1, 60.2, 60.3, 60.4), preferably with switching off or fading out at the jump (70-1, 70-2) from cutting curve to cutting curve,
6.2 that the middle cutting curve (60.3) is traversed after the front and the rear cutting curves (60.1, 60.2);
6.3 that the steps are carried out in the order of b1), b2), b3) and c1).

7. Cutting method according to any one of the preceding claims, **characterized in that** d) comprises:
blowing off and/or extracting the portion parts (28).

8. Cutting device (10) for cutting out and cutting off electrode pieces (14) from a web-like electrode substrate (16) in order to obtain electrode pieces (14) with flat active material (18) and a lateral arrester tab (20) for a series production of cell composites of batteries, the cutting device (10) comprising:
cutting means (12),
conveyor means (30) for conveying a web-like electrode substrate (16) having an active material region (22) and an arrester strip (24) on at least one side of the active material region (22) through a working region (36-1, 36-2) of the cutting means (12), cut portion removal means (32) for removing unneeded portions (26) produced during cutting,
and a control system (34) configured to cause the cutting means (12) to
cut at least one arrester tab (20) free from the arrester strip (24), wherein after the arrester tab (20) in the conveying direction (68) a portion (26) of unneeded material of the arrester strip (24) is produced, **characterized in that** the control system (34) is further configured to carry out a cut (60c1, 60c2, 60.4) both through the electrode piece (14) provided with the arrester tab (20) that has been cut free and also through the cut out portion (26), in order to singulate the electrode piece (14) and to divide the portion (26) into a plurality of portion parts (28) in order to remove these by the cut portion removal means (32).

9. Cutting device (10) according to claim 8, **characterized in that** the cutting device (12) comprises at least one cutting unit (52-1, 52-2) which comprises cutting beam generating means (54) for generating a cutting beam, in particular a laser, and cutting beam deflection means (56), wherein the control system (34) is configured to cause the cutting unit (52-1, 52-2) to move the cutting beam along one or more predetermined cutting curves (60, 60b1, 60b2, 60c1, 60c2, 60.1, 60.2, 60.3, 60.4) over the electrode substrate (16) conveyed by the conveyor (30).

10. Cutting device (10) according to one of claims 8 or 9, **characterized in that** the cutting means (12) has a first cutting unit (52-1) with a first working region (36- 1) and a second cutting unit (52-2) with a second working region (36-2) which are arranged one behind the other and/or overlapping in the conveying direction (68) of the conveyor means (30),
and **in that** the control system (34) is configured to cause the cutting means (12)
to cut out, by means of the first cutting unit (52-1), a first portion (26, 26-1) before the arrester tab (20) in the conveying direction (68) and, simultaneously, synchronously or with a time overlap, to cut out, by means of the second cutting unit (52-2), a second portion (26, 26-2) after that arrester tab (20) in the conveying direction (68), and/or
to carry out a front transection (60c1), viewed in the conveying direction (68), by means of the first cutting unit (52-1) and, simultaneously, synchronously or at least with an overlap in time, to carry out a rear transection (60c2), viewed in the conveying direction (68), by means of the second cutting unit (52-2).

11. Cutting device (10) according to claim 9 or 10, **characterized in that** the control system (34) is configured to cause the cutting beam deflection means (56) b1) to traverse, with the cutting beam, a front cutting curve (60.1) that extends from a beam entry point (64) in the interior of a region of the arrester strip (24) which forms the later unneeded portion (26) to a front corner region (72) between an arrester tab (20) which is at the front with respect to the conveying direction (68) and the active material (18) of the electrode piece (14) and then extends outwards from the front corner region (72) in a direction transverse to the conveying direction (68), in order to separate the front arrester tab (20) from the remaining unneeded portion (26) of the arrester strip (24); and/or
b2) to traverse, with the cutting beam, a rear cutting curve (60.2) that extends from a beam entry point (64) in the interior of the region of the arrester strip (24) forming the later unneeded portion (26) to a rear corner region (72) between a rear arrester tab (20) and the active material (18) of the electrode piece (14) and then extends outwards from the rear corner region (72) in a direction transverse to the conveying direction (68), in order to separate the rear arrester tab (20) from the remaining unneeded portion (26) of the arrester strip (24); and/or
b3) to traverse, with the cutting beam, a middle cutting curve (60.3) that extends from the interior of the portion (26) to a corner region (72) between a first arrester tab (20) and the active material (18) of the electrode piece (14), then in or against the conveying direction (68) to create an end edge of the active material (18) of the electrode piece (14) between the first arrester tab (20) and a second arrester tab (20) adjacent to the first, and from the corner region (72) between the second arrester tab (20) and the active material (18) into the interior of the portion (26) and ends there.

12. Cutting device according to any one of claims 9 to 11, **characterized in that** the control system (34) is configured to cause the cutting beam deflection means to
c1) traverse, with the cutting beam, a singulation cutting curve (60c1, 60c2, 60.4) that extends from outside the arrester strip (24) through the portion (26) transversely through the electrode substrate (16) for the purpose of singulating the electrode piece (14).

13. Cutting device (10) according to any one of claims 8 to 12, **characterized in that** the control system (34) is configured to cause the cutting means (12), the conveyor means (30) and the cut portion removal means (32) to carry out the cutting method according to any one of claims 1 to 7.

14. Computer program containing instructions that cause a cutting device (10) according to any one of claims 8 to 13 to carry out the cutting method according to any one of claims 1 to 7.

15. Use of the cutting method according to any one of claims 1 to 7, the cutting device (10) according to any one of claims 8 to 14 or the computer program according to claim 14 in a series production of cell composites of batteries, in particular for electric vehicles.

## Revendications

1. Procédé de coupe à mettre en œuvre dans le cadre d'une production en série de composites cellulaires de batteries pour séparer des pièces d'électrode (14) d'un substrat d'électrode en forme de bande (16) à l'aide d'un dispositif de coupe (12), de manière à obtenir des pièces d'électrode (14) avec un matériau actif plat (18) et une languette d'arrêt latérale (20), comprenant les étapes suivantes:
a) fournir le substrat d'électrode en forme de bande (16), qui comporte une région de matériau actif (22) et une bande d'arrêt sur au moins un côté de la région de matériau actif (22), en acheminant le substrat d'électrode en forme de bande (16) vers le dispositif de coupe (12);
b) dégager par coupe au moins une languette d'arrêt (20) à partir de la bande d'arrêt, une partie (26) de matériau inutile de la bande d'arrêt (24) étant produite avant et/ou après la languette d'arrêt (20) dans la direction de transport (68), **caractérisé par**
c) la séparation de la pièce d'électrode (14) pourvue de la languette d'arrêt (20) dégagée par coupe, par découpe à travers le substrat d'électrode (16) y compris le matériau actif (18) et également la partie (26) dégager par coupe à l'étape b), de sorte que la partie (26), en étant traversée par coupe, est réduite en taille et décomposée en plusieurs parties (28), et
d) l'enlèvement des parties (28) du dispositif de coupe (12).

2. Procédé de coupe selon la revendication 1, **caractérisé en ce que** l'étape a) comprend au moins l'étape:
a1) transporter le substrat d'électrode (16) à travers deux régions de travail successives et/ou se chevauchant (36-1, 36-2) d'une première unité de coupe (52-1) et d'une deuxième unité de coupe (52-2) du dispositif de coupe (12);
et **en ce que**, dans l'étape b), une première partie (26, 26-1) située avant la languette d'arrêt (20) dans le sens de transport est découpée au moyen de la première unité de coupe (52-1) et, simultanément, de manière synchrone ou avec un décalage temporel, une deuxième partie (26, 26-2) située derrière cette languette d'arrêt (20) dans le sens de transport est découpée au moyen de la deuxième unité de coupe (52-2), et/ou
dans l'étape c), une coupe avant (60c1), vue dans le sens de transport (68), est réalisée au moyen de la première unité de coupe (52-1) et, simultanément, de manière synchrone ou au moins avec un décalage temporel, une coupe arrière (60c2), vue dans le sens de transport (68), est réalisée au moyen de la deuxième unité de coupe (52-2).

3. Procédé de coupe selon l'une quelconque des revendications précédentes, **caractérisé par**
3.1 la génération d'au moins un faisceau de coupe, en particulier un faisceau laser, et
3.2 la direction dudit au moins un faisceau de coupe le long de courbes de coupe (60, 60b1, 60b2, 60c1, 60c2, 60.1, 60.2, 60.3, 60.4) afin de réaliser les étapes b) et c).

4. Procédé de coupe selon la revendication 3, **caractérisé en ce que** l'étape b) comprend au moins une ou plusieurs des étapes suivantes:
b1) diriger ledit au moins un faisceau de coupe le long d'une courbe de coupe avant (60.1) qui s'étend d'un point d'entrée du faisceau (64) à l'intérieur d'une région de la bande d'arrêt (24) formant la partie ultérieurement inutile (26) jusqu'à une région d'angle avant (72) entre une languette d'arrêt (20) qui se trouve à l'avant par rapport à la direction de transport et le matériau actif (18) de la pièce d'électrode (1 4), puis s'étend vers l'extérieur à partir de la région d'angle avant (72) dans une direction transversale à la direction de transport (68), afin de séparer la languette d'arrêt avant (20) de la partie restante inutile (26) de la bande d'arrêt (24);
b2) diriger ledit au moins un faisceau de coupe le long d'une courbe de coupe arrière (60.2) qui s'étend depuis un point d'entrée du faisceau (64) à l'intérieur de la région de la bande d'arrêt (24) formant la partie ultérieurement inutile (26) jusqu'à une région d'angle arrière (72) entre une languette d'arrêt (20) qui se trouve à l'arrière par rapport à la direction de transport (68) et le matériau actif (18) de la pièce d'électrode (14), puis s'étend vers l'extérieur à partir de la région d'angle arrière (72) dans une direction transversale à la direction de transport (68) afin de séparer la languette d'arrêt arrière (20) de la partie restante inutile (26) de la bande d'arrêt (24);
b3) diriger le faisceau de coupe le long d'une courbe de coupe médiane (60.3) qui s'étend de l'intérieur de la partie (26) à une région d'angle (72) entre une première languette d'arrêt (20) et le matériau actif (18) de la pièce d'électrode (14), puis s'étend dans ou contre la direction de transport (68) pour créer un bord d'extrémité du matériau actif (18) de la pièce d'électrode (14) entre la première languette d'arrêt (20) et une deuxième languette d'arrêt (20) adjacente à la première, et s'étend depuis la région d'angle (72) entre la deuxième languette d'arrêt (20) et le matériau actif (18) à l'intérieur de la partie (26) et se termine à cet endroit.

5. Procédé de coupe selon l'une quelconque des revendications 3 ou 4, **caractérisé en ce que** l'étape c) comprend:
c1) diriger ledit au moins un faisceau de coupe le long d'une courbe de coupe de séparation (60.4) qui s'étend depuis l'extérieur de la bande d'arrêt (24) à travers la partie (26) transversalement à travers le substrat d'électrode (16) pour séparer la pièce d'électrode (14).

6. Procédé de coupe selon les revendications 4 et 5, **caractérisé par** au moins une ou plusieurs des caractéristiques suivantes:
6.1 que le faisceau de coupe traverse successivement les courbes de coupe (60b1, 60b2, 60c1, 60c2, 60.1, 60.2, 60.3, 60.4), de préférence avec coupure ou atténuation au niveau du saut (70-1, 70-2) entre les courbes de coupe,
6.2 que la courbe de coupe centrale (60.3) est traversée après les courbes de coupe avant et arrière (60.1, 60.2);
6.3 que les étapes sont effectuées dans l'ordre b1), b2), b3) et c1).

7. Procédé de coupe selon l'une quelconque des revendications précédentes, **caractérisé en ce que** d) comprend:
souffler et/ou extraire les parties (28).

8. Dispositif de coupe (10) pour découper et couper des pièces d'électrode (14) à partir d'un substrat d'électrode en forme de bande (16) afin d'obtenir des pièces d'électrode (14) avec un matériau actif plat (18) et une languette d'arrêt latérale (20) pour une production en série de composites de cellules de batteries, le dispositif de coupe (10) comprenant:
un dispositif de coupe (12),
un dispositif de transport (30) pour transporter un substrat d'électrode en forme de bande (16) comportant une région de matériau actif (22) et une bande d'arrêt (24) sur au moins un côté de la région de matériau actif (22) à travers une région de travail (36-1, 36-2) du dispositif de coupe (12),
un dispositif d'enlèvement de parties découpées (32) pour enlever les parties inutiles (26) produites pendant la coupe,
et un dispositif de commande (34) configuré pour amener le dispositif de coupe (12) à dégager par coupe au moins une languette d'arrêt (20) de la bande d'arrêt (24), dans lequel, après la languette d'arrêt (20) dans la direction de transport (68), une partie (26) de matériau inutile de la bande d'arrêt (24) est produite, **caractérisé en ce que** le dispositif de commande (34) est en outre configuré pour effectuer une découpe (60c1, 60c2, 60.4) à la fois à travers la pièce d'électrode (14) pourvue de la languette d'arrêt (20) qui a été dégagée par coupe et à travers la partie découpée (26), afin de séparer la pièce d'électrode (14) et de diviser la partie (26) en une pluralité de parties (28) afin de les retirer à l'aide du dispositif d'enlèvement des parties découpées (32).

9. Dispositif de coupe (10) selon la revendication 8, **caractérisé en ce que** le dispositif de coupe (12) comprend au moins une unité de coupe (52-1, 52-2) qui comprend un dispositif de génération de faisceau de coupe (54) pour générer un faisceau de coupe, en particulier un laser, et un dispositif de déviation de faisceau de coupe (56), dans lequel le dispositif de commande (34) est configuré pour amener l'unité de coupe (52-1, 52-2) à déplacer le faisceau de coupe le long d'une ou plusieurs courbes de coupe prédéterminées (60, 60b1, 60b2, 60c1, 60c2, 60.1, 60.2, 60.3, 60.4) au-dessus du substrat d'électrode (16) transporté par le convoyeur (30).

10. Dispositif de coupe (10) selon l'une des revendications 8 ou 9, **caractérisé en ce que** le dispositif de coupe (12) comporte une première unité de coupe (52-1) avec une première région de travail (36-1) et une deuxième unité de coupe (52-2) avec une deuxième région de travail (36-2) qui sont disposées l'une derrière l'autre et/ou se chevauchent dans la direction de transport (68) du dispositif de transport (30),
et **en ce que** le dispositif de commande (34) est configuré pour amener le dispositif de coupe (12)
à découper, au moyen de la première unité de coupe (52-1), une première partie (26, 26-1) avant la languette d'arrêt (20) dans la direction de transport (68) et, simultanément, de manière synchrone ou avec un décalage temporel, à découper, au moyen de la deuxième unité de coupe (52-2), une deuxième partie (26, 26-2) après cette languette d'arrêt (20) dans la direction de transport (68), et/ou
à effectuer une section transversale avant (60c1), vue dans la direction de transport (68), au moyen de la première unité de coupe (52-1) et, simultanément, de manière synchrone ou au moins avec un décalage dans le temps, effectuer une section transversale arrière (60c2), vue dans la direction de transport (68), au moyen de la deuxième unité de coupe (52-2).

11. Dispositif de coupe (10) selon la revendication 9 ou 10, **caractérisé en ce que** le dispositif de commande (34) est configuré pour amener le dispositif de déviation du faisceau de coupe (56)
b1) à traverser, avec le faisceau de coupe, une courbe de coupe avant (60.1) qui s'étend d'un point d'entrée de faisceau (64) à l'intérieur d'une région de la bande d'arrêt (24) qui forme la partie ultérieurement inutile (26) jusqu'à une région d'angle avant (72) entre une languette d'arrêt (20) qui est à l'avant par rapport à la direction de transport (68) et le matériau actif (18) de la pièce d'électrode (14), puis s'étend vers l'extérieur à partir de la région d'angle avant (72) dans une direction transversale à la direction de transport (68), afin de séparer la languette d'arrêt avant (20) de la partie restante inutile (26) de la bande d'arrêt (24); et/ou
b2) à traverser, avec le faisceau de coupe, une courbe de coupe arrière (60.2) qui s'étend depuis un point d'entrée de faisceau (64) à l'intérieur de la région de la bande d'arrêt (24) formant la partie ultérieurement inutile (26) jusqu'à une région d'angle arrière (72) entre une languette d'arrêt arrière (20) et le matériau actif (18) de la pièce d'électrode (14), puis s'étend vers l'extérieur depuis la région d'angle arrière (72) dans une direction transversale à la direction de transport (68), afin de séparer la languette d'arrêt arrière (20) de la partie restante inutile (26) de la bande d'arrêt (24); et/ou
b3) à traverser, avec le faisceau de coupe, une courbe de coupe médiane (60.3) qui s'étend depuis l'intérieur de la partie (26) jusqu'à une région d'angle (72) entre une première languette d'arrêt (20) et le matériau actif (18) de la pièce d'électrode (14), puis dans ou contre la direction de transport (68) pour créer un bord d'extrémité du matériau actif (18) de la pièce d'électrode (14) entre la première languette d'arrêt (20) et une deuxième languette d'arrêt (20) adjacente à la première, et depuis la région d'angle (72) entre la deuxième languette d'arrêt (20) et le matériau actif (18) vers l'intérieur de la partie (26) et se termine là.

12. Dispositif de coupe selon l'une quelconque des revendications 9 à 11, **caractérisé en ce que** le dispositif de commande (34) est configuré pour amener le dispositif de déviation du faisceau de coupe à
c1) traverser, avec le faisceau de coupe, une courbe de coupe de séparation (60c1, 60c2, 60.4) qui s'étend depuis l'extérieur de la bande d'arrêt (24) à travers la partie (26) transversalement à travers le substrat d'électrode (16) dans le but de séparer la pièce d'électrode (14).

13. Dispositif de coupe (10) selon l'une quelconque des revendications 8 à 12, **caractérisé en ce que** le dispositif de commande (34) est configuré pour amener le dispositif de coupe (12), le dispositif de transport (30) et le dispositif d'enlèvement de la partie découpée (32) à exécuter le procédé de coupe selon l'une quelconque des revendications 1 à 7.

14. Programme informatique contenant des instructions qui amènent un dispositif de coupe (10) selon l'une quelconque des revendications 8 à 13 à exécuter le procédé de coupe selon l'une quelconque des revendications 1 à 7.

15. Utilisation du procédé de coupe selon l'une quelconque des revendications 1 à 7, du dispositif de coupe (10) selon l'une quelconque des revendications 8 à 14 ou du programme informatique selon la revendication 14 dans une production en série de composites cellulaires de batteries, en particulier pour véhicules électriques.
